# EUROPEAN PATENT APPLICATION

(11) **EP 2 521 138 A1**
(43) Date of publication of application: **07.11.2012**
(21) Application number: 10840881.6
(22) Date of filing: 16.12.2010
(51) Int. Cl.: H01B 5/14, B32B 7/02, B32B 27/18, G06F 3/041, G06F 3/045, H01B 13/00

(54) **CONDUCTIVE LAMINATED BODY AND TOUCH PANEL USING THE SAME**

(30) Priority: 28.12.2009 JP 2009296799
(71) Applicant: Toray Industries, Inc., Tokyo 103-8666 (JP)
(72) Inventor: SATO, Yoshikazu, Otsu-shi Shiga 520-8558 (JP); WATANABE, Osamu, Otsu-shi Shiga 520-8558 (JP); SEKIGUCHI, Hiroki, Otsu-shi Shiga 520-8558 (JP); MATA, Junji, Otsu-shi Shiga 520-8558 (JP)
(74) Representative: Hoefer & Partner
(86) International application number: PCT/JP2010/072627
(87) International publication number: WO 2011/081023

(57) **Abstract**

Provided is a conductive laminated body which has resistance to removal agents employed in chemical etching performed when a conductive laminated body is processed to form an electrode member employed in a touch panel for example, and which has excellent durability with respect to heat. The conductive laminated body in which a conductive layer, which includes a conductive component having a network structure comprising a linear structure, and a protective layer are laminated from the substrate side on at least one face of the substrate, wherein the average thickness (t) of the protective layer is 100 to 1,000 nm.

## Description

### TECHNICAL FIELD

The present invention relates to a conductive laminated body having a protective layer on a conductive layer containing a conductive component composed of linear structures. In more detail, this invention relates to a conductive laminated body with resistance to the removing agent used for chemical etching in the case where the conductive laminated body is processed and formed into electrode members used for touch panels and the like and with good durability against heat. This invention further relates to a conductive laminated body used also in the electrode elements used for display-related articles such as liquid crystal displays, organic electroluminescence and electronic paper, solar cell modules, etc.

### BACKGROUND ART

In recent years, cell phones, gaming machines, personal computers and the like respectively mounted with touch panels are widely used. A touch panel uses a conductive member for electrodes, and the touch panel that allows complicated operations when used has a desired pattern formed on the conductive layer surface of the conductive member.

As the conductive member used in the touch panel, a conductive laminated body in which a layer formed of a general polymer compound is laminated on a thin conductive film layer provided on a polymer substrate (patent document 1) and a conductive laminated body in which a layer formed of a polymer compound having functional groups composed of specific elements such as cyano groups is laminated (patent document 2) are proposed. Further, a conductive layer in which a layer having a silicone monomer or silicone oligomer as a binder component together with SiO₂ as a main component is laminated on a conductive layer containing spherical fine metal particles provided on a polymer substrate (patent document 3) and a conductive laminated body in which a layer formed of a cured polyfunctional monomer is laminated (patent document 4) are proposed. Furthermore, a conductive laminated body in which a thin silicon coating layer, i.e., silica layer is laminated on a conductive layer containing carbon nanotubes (hereinafter abbreviated as CNTs) as linear structures provided on a polymer substrate (patent document 5) is also proposed.

On the other hand, as methods for forming a pattern of a conductive member, a laser ablation method and a chemical etching method using an etchant are generally used (patent document 6). The laser ablation method allows highly precise patterning without requiring a resist since a conductive film is irradiated with a near infrared region (NIR) laser beam for removing unnecessary portions, but the method is not suitable for processing a large area for such reasons that the applicable substrates are limited, that the cost is high and that the processing speed is low. On the other hand, for the chemical etching method, for example, an etching medium containing an acid is proposed (patent document 7), and the etching medium with a desired pattern (for example, a pattern of straight lines with a line width of tens of micrometers to several millimeters, etc.) is transferred onto a conductive member by screen printing or the like, followed by washing to remove the portions corresponding to the transferred etching medium pattern, thereby obtaining a pattern (for example, a pattern of straight lines with a line width of tens of micrometers to several millimeters, etc.). Therefore, this method is advantageous due to a small number of steps and low cost. Transparent conductors based on nanowires are also proposed (patent document 8).

### PRIOR ART DOCUMENTS

### PATENT DOCUMENTS

Patent document 1: JP 2003-115221 A
Patent document 2: JP 2007-276322 A
Patent document 3: Patent No. 3442082
Patent document 4: JP 2001-243841 A
Patent document 5: Patent No. 3665969
Patent document 6: JP 2001-307567 A
Patent document 7: JP 2009-503825 A
Patent document 8: JP 2009-505358 A

### SUMMARY OF THE INVENTION

### PROBLEMS TO BE SOLVED BY THE INVENTION

However, like the protective layers of the laminated bodies described in patent documents 1 to 3, in the case where the layer laminated on the conductive layer is formed of a general polymer compound, or a polymer compound having functional groups composed of specific elements such as cyano groups, or contains a silicone monomer or silicone oligomer as a constituent, such a layer does not have the resistance to the etching medium containing an acid such as that described in patent document 7. Accordingly, the protective layer is peeled/dissolved together with the conductive layer, to expose the polymer substrate, and consequently the heat in the subsequent heat treatment step and during use as a touch panel or the like causes an oligomer to be precipitated from the substrate, thus remarkably lowering optical properties. Further, as other various problems, the formed pattern is likely to be visible for lowering the quality of the displayed image, and partially peeled/dissolved portions become defects. Furthermore, the layer composed of a cured polyfunctional monomer as in patent document 4 is relatively densely bound and has good acid resistance, but in the case where the conductive component is composed of non-linear structures such as fine metal particles, the fine metal particles in the conductive layer are also densely contained in order to ensure electrical conduction. Consequently it is necessary to take a long processing time for forming the pattern and to increase the acid concentration, and as a result, the protective layer is peeled/dissolved together with the conductive layer as in patent documents 1 to 3. Therefore, the problems cannot be solved. Moreover, even if the conductive component is composed of CNTs serving as linear structures as in patent document 4, in the case where a silica layer inferior in acid resistance is laminated to be so thin as to prevent the conductivity from being impaired, the problems cannot be solved either.

In view of the background of the prior art as described above, this invention intends to improve the durability of the laminated body against heat after etching even though the protective layer is so thin as to prevent the conductivity from being impaired, by improving the conductive layer and the protective layer against the removing agent used for chemical etching.

### MEANS FOR SOLVING THE PROBLEMS

This invention for solving the abovementioned problems employ the following configuration. That is,
(1) conductive laminated body, in which a conductive layer having a network structure composed of linear structures and a protective layer are laminated at least on one surface of a substrate, wherein the average thickness (t) of the protective layer is 100 to 1,000 nm,
(2) if the thickness of the protective layer removed in the case where the protective layer is coated with a removing agent containing an acid component and having a pH of 2.0 at 130°C for 3 minutes is X, the protective layer has portions thicker than X and portions thinner than X,
(3) the aforementioned protective layer is composed of a polymer compound not containing any of the following:
   S element, P element, metal element, metal ion and the N element constituting a functional group
(4) the surface of the aforementioned protective layer has a pure water contact angle of 80° or more and an oleic acid contact angle of 13° or more,
(5) the aforementioned polymer compound has a crosslinked structure,
(6) the aforementioned linear structures are silver nanowires and the protective layer is composed of a polyfunctional acrylic polymer compound or polyfunctional methacrylic polymer compound not containing any one of the following:
   S element, P element, metal element, metal ion and the N element constituting a functional group,
(7) the aforementioned linear structures are carbon nanotubes and the protective layer is composed of a polyfunctional acrylic polymer compound or polyfunctional methacrylic polymer compound not containing any one of the following:
   S element, P element, metal element, metal ion and the N element constituting a functional group,
(8) the aforementioned protective layer contains two or more photo-initiators, the respective maximum absorption wavelength values of which are different from each other by 20 nm or more,
(9) the total light transmittance based on JIS K 7361-1 (1997) in the case where light falls on the protective layer side is 80% or more,
(10) an acid-treated conductive laminated body, obtained by coating the protective layer of the conductive laminated body set forth in any one of the abovementioned paragraphs, with a removing agent containing an acid component and having a pH of 2.0 at 130°C for 3 minutes, which has conductive regions and nonconductive regions, wherein the conductive component is removed in the nonconductive regions while the removal marks of the non-remaining conductive component exist, and
(11) a touch panel obtained by using the conductive laminated body set forth in any one of (1) through (9).

Further, the conductive laminated body of this invention can be suitably used for touch panels. Furthermore, the conductive laminated body of this invention can also be suitably used in the electrode members used for display-related articles such as liquid crystal displays, organic electroluminescence and electronic paper and also for solar cell modules, etc.

### EFFECTS OF THE INVENTION

This invention can provide a conductive laminated body in which a conductive layer containing a conductive component with a network structure composed of linear structures and a specific protective layer are laminated in this order from the side of a substrate at least on one surface of the substrate, to have the resistance to the removing agent containing an acid component used for chemical etching, thus having good durability against heat, though the protective layer is so thin as to prevent the conductivity from being impaired.

### BRIEF DESCRIPTION OF THE DRAWINGS

[Fig. 1] shows an example of the typical sectional view of the conductive laminated body of this invention.
[Fig. 2] shows examples of the typical views of linear structures observed from the conductive layer side of the conductive laminated body of this invention.
[Fig. 3] is a typical sectional view showing an example of the touch panel as a mode of this invention.
[Fig. 4] shows an example of the typical sectional view near the linear structures of this invention.
[Fig. 5] is a schematic drawing of a fluidized bed vertical reactor.

### MODES FOR CARRYING OUT THE INVENTION

In the conductive laminated body of this invention, a conductive layer containing a conductive component with a network structure composed of linear structures and a protective layer are laminated in this order from the side of a substrate at least on one surface of the substrate, wherein the average thickness (t) of the protective layer is 100 to 1,000 nm. Meanwhile, since the conductive component is composed of linear structures, in the case where the amount of the linear structures is less than a certain amount, some areas free from existing linear structures in the plane may be scattered. However, even though such areas may exist, if the linear structures continuously and uniformly exist to form a network in the plane so that conductivity can be established between given two points, it is defined that a conductive layer is formed. That is, in such a case, the layer-like region formed by the linear structures (including the areas where the scattered linear structures do not exist) is defined as the conductive layer. Further in this case, in the areas where the linear structures do not exist, the surface of the protective layer may exist more on the substrate side than the surface of the linear structures (from the viewpoint of the protective layer side, the linear structures are partially buried in the protective layer), but including such a case, the range from the surface of the substrate to the outermost surface of the linear structures is defined as the conductive layer, and the range from the outermost surface of the linear structures (the surface of the conductive layer) to the outermost surface of the laminated body is defined as the protective layer.

Since the average thickness (t) of the protective layer is t ≤ 1, 000 nm, the conductivity of the conductive component is not prevented, and the conductive laminated body is free from the abnormal rise of resistance value.

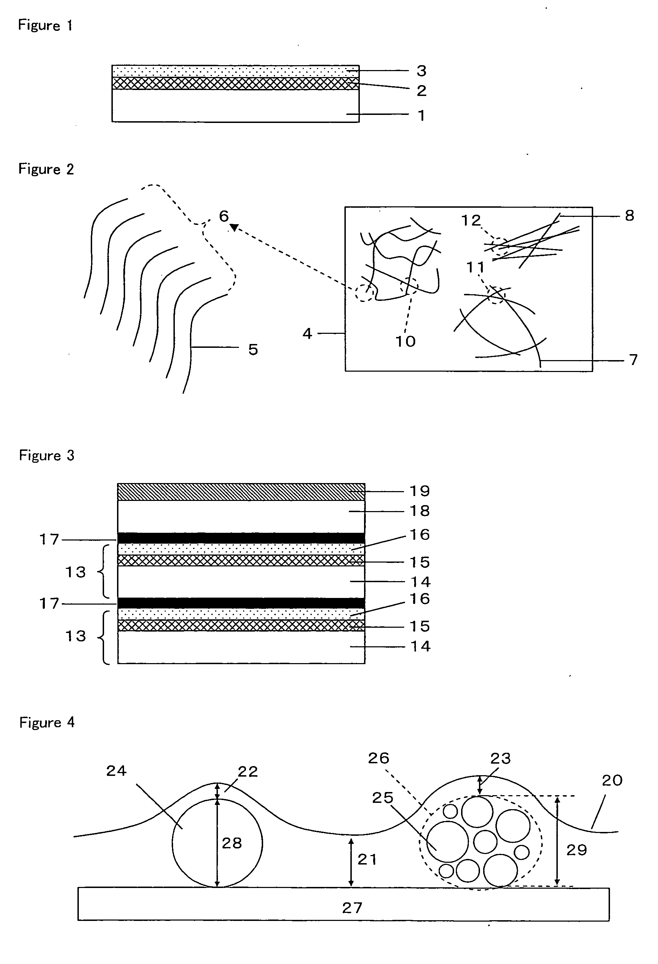

Further, in the case where the conductive component is composed of linear structures having a network structure, even if there are sparse portions free from the linear structures, electricity flows through the linear structures. Consequently the resistance value of the surface is sufficiently low and can be kept at a practically negligibly low level. On the other hand, in the conductive laminated body patterned by chemical etching, it is necessary that the conductive component of the patterned portions is removed to achieve electric insulation. The reason is that if the electric insulation is insufficient, non-conformance such as short circuit occurs when the conductive laminated body is used as an electrode member, and in this case, even if the durability of the protective layer is sufficient, the conductive laminated body cannot be used as an electrode member. If the conductive component is composed of linear structures, it is estimated that the electric insulation is likely to be obtained since the conductive component can be easily removed by the effect described later. Further, if the conductive component is composed of linear structures, the linear structures project toward the protective layer, and actually as shown in Fig. 4, preferably the thickness of the protective layer becomes thick in the portions where the linear structures are sparse and becomes thin in the portions where the linear structures exist. In this case, when the protective layer material is etched by using a removing agent containing an acid component and having a pH of 2.0 used for chemical etching at 130°C for 3 minutes, the acid component erodes the protective layer material at the same rate. Accordingly in the aforementioned thin portions of the protective layer, the protective layer is peeled/dissolved, but in the aforementioned thick portions of the protective layer, the protective layer can remain. That is, in a preferred mode of this invention, if the thickness of the protective layer removed in the case where the protective layer is coated with a removing agent containing an acid component and having a pH of 2.0 at 130°C for 3 minutes is (X), the protective layer has portions thicker than (X) and portions thinner than (X). Consequently in the thin portions of the protective layer, the acid component reaches the linear structures in a short period of time, and the acid component erodes selectively in the line direction (in the major axis direction described later) of the linear structures with low resistance to the acid component, to remove the conductive component to a relatively large rate. On the other hand, in the thick portions of the protective layer, the protective layer can remain, and as a result, it is estimated that still after washing, the protective layer can remain to seal the substrate surface, for inhibiting the oligomer precipitation. Further, it is estimated that since the protective layer remains without being peeled/dissolved, the level difference between the formed pattern portions and the non-pattern portions is too small to be visible, and that some local portions remain without being peeled or dissolved. With regard to the matter that if the thickness of the protective layer removed in the case where the protective layer is coated with the abovementioned removing agent containing an acid component and having a pH of 2.0 at 130°C for 3 minutes is (X), the protective layer has portions thicker than (X) and portions thinner than (X), the matter can be confirmed since there are portions having the protective layer and portions free from the protective layer after the aforementioned treatment by the removing agent.

Thus, it is estimated that even if there is a difference between the permeation rate of the aforementioned removing component into the linear structures and the permeation rate into the protective layer, in the case where the average thickness (t) of the protective layer is less than 100 nm, the period of time taken for the removing component to complete the permeation through the protective layer and the linear structures becomes short, making small the difference in the period for the removing component to complete permeation, as a result, not allowing the linear structures to be selectively removed, and causing the protective layer to be removed together, thus being likely to exposure the substrate and not allowing the effect of oligomer inhibition to be obtained. However, it is estimated that if the average thickness (t) is 100 nm or more, the protective layer can remain in the thick portions thereof, allowing the oligomer to be inhibited. Further, in the case where the average thickness (t) of the protective layer is thicker than 1, 000 nm, the following problems occur: the amount of the linear structures in the surface layer on the conductive side (on the side laminated with the conductive layer and the protective layer in this invention) is so small as to lower the conductivity, making it difficult to achieve a desired surface resistance value; and the removing component cannot reach the linear structures, and due to insufficient removal, the electric insulation is insufficient, to cause such non-conformance as short-circuit. Thus, the conductive laminated body cannot be used as an electrode member. However, if the average thickness (t) of the protective layer is 1,000 nm or less, a conductive laminated body ensuring the conductivity of the conductive component and free from abnormal rise of resistance value and conduction failure can be obtained.

The conductive laminated body of this invention has a conductive layer containing a conductive component having a network structure composed of linear structures at least on one surface of the substrate. In the case where the abovementioned conductive layer is not provided, the conductive laminated body does not show conductivity.

It is necessary that the conductive component of the conductive layer is composed of linear structures. In the case where the conductive component is not composed of linear structures, if the thickness of the protective layer removed by the removing agent described later is (X), the protective layer cannot have portions thicker than (X) and portions thinner than (X). Consequently in order to remove the conductive layer, the protective layer as a whole must be removed, and therefore the protective layer cannot be made to remain in the etched portions after completion of etching. In the case where the linear structures are used, the abovementioned thinner portions and thicker portions can be formed, and etching allows the protective layer to be removed in the portions thinner than the thickness removed by the removing agent, to etch the underlying linear structures. In this case, even if the removed portions of the protective layer are slight, the linear structures can be etched. Therefore, the most portions of the protective layer can be made to remain on the laminated body.

Further, in the abovementioned etching step, once the linear structures begin to be etched, the rate at which the linear structures are etched is far higher than the rate at which the protective layer is etched. Consequently the protective film from which the linear structure portions are removed can be obtained.

In the conventional etching, the protective layer is dissolved/peeled together with the conductive layer, to expose the substrate. Consequently after completion of chemical etching, the oligomer is precipitated from the substrate due to heat, not allowing durability to be obtained, and the optical properties remarkably decline. Further, the electric insulation of the portions patterned by chemical etching is also insufficient.

In this invention, a linear structure is a structure in which the ratio of the major axis length to the minor axis length, i.e., the aspect ratio = major axis length/minor axis length is larger than 1 (on the other hand, for example, the aspect ratio of a sphere is 1). Examples of the linear structures include fibrous conductors, needle-like conductors like whiskers, etc. The aforementioned minor axis and major axis lengths cannot be simply limited, since they are different depending on the types of linear structures. However, it is preferred that the minor axis length is smaller than each element of a formed pattern, being in a range from 1 nm to 1, 000 nm (1 µm), and the major axis length is only required to be larger than the minor axis length such that the aforementioned aspect ratio = major axis length/minor axis length is larger than 1, being preferably in a range from 1 µm to 100 µm (0.1 mm).

The aforementioned fibrous conductors can be carbon-based fibrous conductors, metal-based fibrous conductors, metal oxide-based fibrous conductors, metal oxide-based fibrous conductors or the like. The carbon-based fibrous conductors can be polyacrylonitrile-based carbon fibers, pitch-based carbon fibers, rayon-based carbon fibers, vitreous carbon, CNTs, carbon nanocoils, carbon nanowires, carbon nanofibers, carbon whiskers, graphite fibrils, etc. The metal-based fibrous conductors can be a fibrous or nanowire-like metal or alloy, etc. produced from gold, platinum, silver, nickel, silicon, stainless steel, copper, brass, aluminum, zirconium, hafnium, vanadium, niobium, tantalum, chromium, molybdenum, manganese, technetium, rhenium, iron, osmium, cobalt, zinc, scandium, boron, gallium, indium, silicon, germanium, tin, magnesium, etc. The metal oxide-based fibrous conductors can be a fibrous or nanowire-like metal oxide or metal oxide composite, etc. produced from InO₂, InO₂Sn, SnO₂, ZnO, SnO₂-Sb₂O₄, SnO₂-V₂O₅, TiO₂(Sn/Sb)O₂, SiO₂(Sn/Sb)O₂, K₂O-nTiO₂- (Sn/Sb) O₂, K₂O-nTiO₂C, etc. These fibrous conductors can also be treated on the surfaces. Further, non-metal materials such as plant fibers, synthetic fibers and inorganic fibers coated or vapor-deposited on the surfaces with any of the aforementioned metals and the aforementioned metal oxides or CNTs are also included in the fibrous conductors.

The aforementioned needle-like conductors such as whiskers are formed of a metal, carbon-based compound or a compound such as a metal oxide. The metal can be an element belonging to group IIA, group IIIA, group IVA, group VA, group VIA, group VIIA, group VIII, group IB, group IIB, group IIIB, group IVB or group VB. Specifically it can be gold, platinum, silver, nickel, stainless steel, copper, brass, aluminum, gallium, zirconium, hafnium, vanadium, niobium, tantalum, chromium, molybdenum, manganese, antimony, palladium, bismuth, technetium, rhenium, iron, osmium, cobalt, zinc, scandium, boron, gallium, indium, silicon, germanium, tellurium, tin, magnesium or any of alloys containing them. The carbon-based compound can be carbon nanohorns, fullerenes, graphene, etc. The metal oxide can be InO₂, InO₂Sn, SnO₂, ZnO, ZnO₂-Sb₂O₄, SnO₂-V₂O₅, TiO₂(Sn/Sb)O₂, SiO₂(Sn/Sb)O₂, K₂O-nTiO₂-(Sn/Sb)O₂, K₂O-nTiO₂C, etc. Among these linear structures, in view of optical properties such as transparency, conductivity, etc., silver nanowires or CNTs can be preferably used.

As an example of the aforementioned linear structure, CNTs are explained. In this invention, the CNTs used as a component of the conductive layer can be any of single-walled CNTs, double-walled CNTs, triple-walled or more multiple-layer CNTs. CNTs with a diameter of approx. 0.3 to approx. 100 nm and a length of approx. 0.1 to approx. 20 µm can be preferably used. Meanwhile, in order to enhance the transparency of the conductive laminated body and to reduce the surface resistance value described later, single-walled CNTs or double-walled CNTs with a diameter of 10 nm or less and a length of 1 to 10 µm are more preferred. Further, it is preferred that the CNT aggregates do not contain such impurities as amorphous carbon and catalyst metal as far as possible. In the case where the CNT aggregates contain these impurities, they can be refined as appropriate by acid treatment, heat treatment, etc. The CNTs can be synthesized or produced by an arc discharge method, laser ablation method, catalytic chemical vapor phase method (method of using a catalyst having a transition metal loaded in a carrier among chemical vapor phase methods), etc. Among them, a catalytic chemical vapor phase method that ensures good productivity and can reduce the production of impurities such as amorphous carbon is preferred.

In this invention, the conductive layer can be formed by coating a CNT dispersion. In order to obtain a CNT dispersion, it is general to disperse CNTs together with a solvent using a mixing and dispersing machine or ultrasonic irradiator, and it is desirable to further add a dispersing agent.

The dispersing agent is not especially limited if CNTs can be dispersed, but in view of coating a substrate with a CNT dispersion, the adhesion of the conductive layer containing dried CNTs to the substrate, the hardness and rub fastness of the film, it is preferred to select a synthetic polymer or a natural polymer. Further, a crosslinking agent can also be added to such an extent that the dispersibility is not impaired.

Examples of the synthetic polymer include a polyether diol, polyester diol, polycarbonate diol, polyvinyl alcohol, partially saponified polyvinyl alcohol, acetacetyl group-modified polyvinyl alcohol, acetal group-modified polyvinyl alcohol, butyral group-modified polyvinyl alcohol, silanol group-modified polyvinyl alcohol, ethylene-vinyl alcohol copolymer, ethylene-vinyl alcohol-vinyl acetate copolymer resin, dimethylaminoethyl acrylate, dimethylaminoethyl methacrylate, acrylic resin, epoxy resin, modified epoxy resin, phenoxy resin, modified phenoxy resin, phenoxy ether resin, phenoxy ester resin, fluorine-based resin, melamine resin, alkyd resin, phenol resin, polyacrylamide, polyacrylic acid, polystyrenesulfonic acid, polyethylene glycol and polyvinylpyrrolidone. The natural polymer can be selected, for example, from polysaccharides such as starch, pullulan, dextran, dextrin, guar gum, xanthan gum, amylose, amylopectin, alginic acid, gum arabic, carrageenan, chondroitin sulfate, hyaluronic acid, curdlan, chitin, chitosan, cellulose and cellulose derivatives. Derivatives mean publicly known conventional compounds such as esters and ethers. Any one of them can be used alone, or two or more of them can also be used as a mixture. Among them, polysaccharides and polysaccharide derivatives are preferred, since they are excellent in CNT dispersibility. Further, celluloses and cellulose derivatives are preferred since film formability is high. Above all, ester and ether derivatives are preferred. Specifically carboxymethyl cellulose, salts thereof and the like are suitable.

Further, the mixing ratio between CNTs and the aforementioned dispersing agent can also be adjusted. It is preferred that the mixing ratio between CNTs and the dispersing agent is such a ratio that does not cause any problem in the adhesion to the substrate, hardness or rub fastness. Specifically it is preferred that the amount of CNTs is in a range from 10 mass% to 90 mass% based on the total mass of the conductive layer. A more preferred range is 30 mass% to 70 mass%. If the amount of CNTs is 10 mass% or more, the conductivity necessary for the touch panel is likely to be obtained, and further, when the substrate is coated on the surface with the coating solution, the coating solution is likely to be uniformly coated without being repelled, and in addition, a conductive laminated body with good appearance quality can be supplied at good productivity. It is preferred that the amount is 90 mass% or less, for such reasons that the dispersibility of CNTs in the solvent becomes better, that cohesion is unlikely to occur, that a good CNT coating layer can be easily obtained, and that the productivity is good. Further, the amount of CNTs being 90 mass% or less is also preferred for such reasons that the coating film is also strong, that abrasion is unlikely to occur during the production process, and that the uniformity of surface resistance value can be maintained.

Further, the nanowires of the metals and metal oxides enumerated as the aforementioned linear structures are disclosed in JP 2009-505358 A, JP 2009-146747 A and JP 2009-70660 A, and furthermore as needle-like conductors such as whiskers, for example, Dentol WK series (produced by Otsuka Chemical Co., Ltd.) such as WK200B, WK300R and WK500 comprising potassium titanate fibers and tin-antimony oxide as composite compounds, and Dentol TM series (produced by Otsuka Chemical Co., Ltd.) such as TM100 comprising silicon dioxide fibers and tin-antimony oxide as composite compounds are commercially available. Any one type of the aforementioned linear structures can be used alone or multiple types of the linear structures can also be used in combination as a mixture. Furthermore, as required, another micro-size to nano-size conductive material can also be added, and the linear structures are not especially limited thereto or thereby.

In this invention, the linear structures exist as a network structure in the conductive layer. The network structure increases the conductive paths in the plane direction on the protective layer side, and the surface resistance value of the conductive layer on the protective layer side can be easily adjusted to a low level. Further, the acid component in the removing agent migrates along the network structure, to erode. Accordingly since the linear structures are more selectively eroded, the protective layer is more likely to remain, and the conductive laminated body can have better durability against heat. The network structure in this invention means a structure in which linear structures contact each other at least at one contact point, and the smallest network structure is a structure in which two linear structures have a contact point. A contact point may be formed between any portions of linear structures. Ends of linear structures may contact each other, or an end of a linear structure may contact any portion other than the ends of another linear structure. Any portions other than the ends of linear structures may also contact each other. Further, at a contact point, the linear structures concerned may be bonded to each other or may also merely contact each other. The network structure can be observed by the method described later, though the method is not especially limited.

In this invention, the average thickness (t) of the protective layer must be 100 to 1, 000 nm. If the average thickness (t) is thicker than 1,000 nm, the following problems occur: the amount of the linear structures in the surface layer on the conductive side (the side laminated with the conductive layer and the protective layer in this invention) is so small as to lower the conductivity, making it difficult to achieve a desired surface resistance value; and the removing component cannot reach the linear structures, and due to insufficient removal, the electric insulation is insufficient to cause such non-conformance as short-circuit, making the pattern formation of the conductive layer difficult and not allowing a desired pattern to be obtained. Thus, the conductive laminated body cannot be used as an electrode member. However, if the average thickness (t) of the protective layer is 1,000 nm or less, the conductivity of the conductive component is not prevented, and a conductive laminated body free from abnormal rise of resistance value and conduction failure can be obtained. Further, in the case where the average thickness (t) of the protective layer is less than 100 nm, the time taken for the removing component to complete the permeation through the protective layer and the linear structures becomes short, and consequently the difference in the period for the removing component to complete permeation becomes small. As a result, the linear structures cannot be selectively removed, and the protective layer is also removed together. Accordingly the substrate is likely to be exposed, and the effect of inhibiting the oligomer cannot be obtained. However, if the average thickness is 100 nm or more, the protective layer can be made to remain in the thick portions thereof, and the oligomer can be inhibited. The average thickness (t) of the protective layer cannot be simply limited, since it depends also on the diameter (r) of the linear structures, but preferred is t ≤ 500 nm. More preferred is t ≤ 400 nm, and the most preferred is t ≤ 350 nm. If the thickness is t ≤ 500 nm, the protective layer remains sufficiently after completion of chemical etching, and the effect of preventing the oligomer generation is high. If the thickness is t ≤ 400 nm, the effect of preventing the oligomer generation is maintained, and a lower surface resistance value is likely to be obtained. Further, if the thickness is t ≤ 350, the conductive laminated body is likely to have a low surface resistance value stably even if the conductivity of the conductive component is somewhat high.

In this connection, the average thickness (t) of the protective layer is obtained as described below. The nearby region including the portion to be observed, of a sample is encapsulated with ice and frozen and secured, or encapsulated with a material stronger in securing force than ice such as an epoxy resin and is then cut in the direction perpendicular to the film surface using a rotary microtome produced by Nihon Microtome Kenkyusho K.K. having a diamond knife set at a knife inclination angle of 3°. Subsequently the obtained cross section of the film is observed by using a field emission scanning electron microscope (JSM-6700-F produced by JEOL Ltd.) at an accelerating voltage of 3.0 kV at respective observation magnifications of 10,000 to 100,000x by adequately adjusting the image contrast. From each obtained photograph of the cross section, given five places each of the t1 (the thickness of the protective layer in a portion where the linear structures do not exist: the aforementioned thick portion of the protective layer) and t2 (the thickness of the protective layer laminated on the top of a single linear structure or the top of an aggregate consisting of linear structures: the aforementioned thin portion of the protective layer) respectively shown in Fig. 4 are measured likewise at observation magnifications of 10,000 to 100,000x (calculated from the magnifications), and the values are averaged.

In this invention, it is preferred that the protective layer is such that if the thickness of the protective layer removed by coating the protective layer with a removing agent containing an acid component and having a pH of 2.0 at 130°C for 3 minutes is (X), the protective layer has portions thicker than (X) and portions thinner than (X). The removed thickness (X) in this invention refers to the thickness that has been removed. That is, if the protective layer has only portions thicker than the removed thickness (X), the linear structures constituting the conductive component cannot be removed for patterning. Further, if the protective layer has only portions thinner than the removed thickness (X) (in the case where the protective layer has a uniform thickness, when the conductive layer is etched, the removed thickness (X) of the protective layer is larger than the thickness of the protective layer), the protective layer is dissolved/peeled together with the conductive layer after washing, to expose the substrate, and the following various problems can occur: the oligomer is precipitated from the substrate, to remarkably lower the optical properties; the formed pattern is likely to be visible, to lower the quality of the displayed image; and the partially peeled/dissolved portions become defects. In this case, if the conductive component of the conductive layer is composed of linear structures, the linear structures can overlie each other when they form the network structure described later, and the overlying portions can project relatively to the average thickness (t) of the protective layer, and if the removed thickness of the protective layer is (X), the protective layer can have portions thicker than (X) and portions thinner than x. In this case, the projections formed by the overlying linear structures relative to the average thickness (t) of the protective layer can be confirmed by using the aforementioned field emission electron scanning microscope (JSM-6700-F produced by JEOL Ltd.), or by observing the cross section or surface by the method described later, or also from the roughness of the surface over and near the linear structures, though the confirmation method is not limited thereto or thereby. In this case, the aforementioned aggregate of linear structures can be in a state where the linear structures gather at random without any regularity in the direction of disposal, or in a state where the linear structures gather in such a manner that their faces lying in the major axis direction are kept in parallel to each other. As an example of the state where the linear structures gather in such a manner that their faces lying in the major axis direction are kept in parallel to each other, it is known that when the aforementioned CNTs are used to form a conductive layer, aggregates called bundles are formed, and linear structures can also have similar bundle structures. In the case where bundles are formed, the tops of the bundles on the protective layer side may project toward the protective layer.

The removing agent used in this invention is explained below. The removing agent used in this invention contains an acid component and has a pH of 2.0, and in the case where the protective layer is coated with the removing agent at 130°C for 3 minutes, the linear structures can be selectively removed from the portions of the protective layer thinner than the aforementioned removed thickness (X) . The removing agent used in this invention contains one or more selected from the group consisting of an acid with a boiling point of 80°C or higher, a compound capable of generating an acid by external energy, a solvent, a resin and a leveling agent. If a leveling agent is contained, it gives a high permeation power to the conductive layer removing agent, and the fibrous conductive component can be easily removed though the removal has been difficult hitherto. If the protective layer on the conductive layer side is at least partially coated with the aforementioned removing agent, heat-treated at 80°C or higher, and washed using a liquid, to remove the conductive layer, then the conductive layer can be selectively removed in the portions coated with the removing agent. If the removing agent is applied to desired places, a complicated and highly precise pattern including sharp angles and curves can be formed as desired. It is preferred that the heat treatment temperature is lower than the boiling points of the constituents other than the solvent of the removing agent and lower than 200°C.

The removing agent used in this invention allows the easy removal of also the conductive layer containing a metal with low reactivity such as CNTs, graphene, silver or copper as a conductive component.

The acid preferably used in the removing agent has a boiling point of 80°C or higher. In this connection, the boiling point in this invention refers to the value at atmospheric pressure and is measured according to JIS K 5601-2-3 (1999). It is preferred that the boiling point of the removing agent is 100°C or higher, and more preferred is 200°C or higher. Meanwhile in this invention, an acid that does not have a clear boiling point and begins to be thermally decomposed at 80°C or higher without being gasified when heated is also included in the acid with a boiling point of 80°C or higher. Further, an acid with a vapor pressure density of 30 kPa or lower at the heat treatment temperature for removing the conductive layer is more preferred. Examples of the acid include monocarboxylic acids such as formic acid, acetic acid and propionic acid, dicarboxylic acids such as oxalic acid, succinic acid, tartaric acid and malonic acid, tricarboxylic acids such as citric acid and tricarballylic acid, alkylsulfonic acids such as methanesulfonic acid, phenylsulfonic acids such as benzenesulfonic acid, alkylbenzenesulfonic acids such as toluenesulfonic acid and dodecylbenzenesulfonic acid, sulfonic acid compounds such as phenolsulfonic acid, nitrobenzenesulfonic acid, styrenesulfonic acid and polystyrenesulfonic acid, derivatives obtained by partially fluorinating organic acids such as trifluoroacetic acid, and inorganic acids such as sulfuric acid, hydrochloric acid, nitric acid and phosphoric acid. Two or more of them can also be contained.

Among them, an acid with high oxidizing power is preferred, and sulfuric acid or sulfonic acid compound is more preferred. The boiling point of sulfuric acid at atmospheric pressure is 290°C, and the vapor pressure density of sulfuric acid at, for example, 150°C is 1.3 kPa or lower. Therefore, even if sulfuric acid is heated at this temperature, it remains liquid and permeates deep into the linear structures in the conductive layer. Further, sulfuric acid has high oxidizing power, and consequently even at a low temperature of approx. 80 to approx. 200°, sulfuric acid is likely to react with the conductive layer and can remove the conductive layer without affecting the substrate by heat treatment for a shorter period of time than that required by nitric acid or acetic acid. Further, since a sulfonic acid compound is a solid acid at atmospheric pressure, it does not evaporate, and the vapor pressure density of it at, for example, 150°C is 1.3 kPa or lower. Therefore, even if it is heated at this temperature, it neither evaporates nor sublimes, and at the time of heating, the reaction is efficiently accelerated. Consequently it can remove the conductive layer by heat treatment for a short period of time. Further, a removing agent containing a solid acid allows easy control of non-Newtonian flowability, and therefore a sulfonic acid compound is especially preferred since highly precise patterning can be performed, for example, since a straight line pattern with a line width of, for example, approx. 30 µm can be formed with less variation of line width (line bending).

The compound capable of generating an acid by external energy, which can be preferably used as the removing agent, can be a compound capable of generating an acid by radiation, ultraviolet irradiation and/or heat. Examples of the compound include sulfonium compounds such as 4-hydroxyphenyldimethylsulfonium, hexafluoroantimonate and trifluoromethanesulfonate, benzophenone compounds such as 4,4-bis(dimethylamine)benzophenone and 4,4-dichlorobenzophenone, benzoin compounds such as benzoin methyl ether, phenylketone compounds such as 4-benzoyl-4-methyl diphenyl ketone and dibenzyl ketone, acetophenone compounds such as 2,2-diethoxyacetophenone and 2-hydroxy-2-methylpropionephenone, thioxanthene compounds such as, 2,4-diethylthioxanthene-9-one and 2-chlorothioxanthene, anthraquinone compounds such as 2-aminoanthraquinone and 2-ethylanthraquinone, anthrone compounds such as benzanthrone and methyleneanthrone, imidazole compounds such as 2,2-bis(2-chlorophenyl)-4,4,5,5-tetraphenyl-1,2-biimidazole, triazine compounds such as 2-(3,4-dimethoxystyryl)-4,6-bis(trichloromethy)-1,3,5-triazin e and 2-[2-(5-methylfuran-2-yl)vinyl]-4,6-bis(trichloromethyl)-1,3, 5-triazine, benzoyl compounds such as 2-benzoyl benzoic acid and benzoyl peroxide, sulfone compounds such as 2-pyridyl tribromomethyl sulfone and tribromomethyl phenyl sulfone, iodonium compounds such as 4-isopropyl-4-methyldiphenyliodonium tetrakis(pentafluorophenyl)borate and diphenyliodonium trifluoromethane sulfonic acid, tetramethylthiuram disulfide, 9-fluorenone, dibenzosuberone, N-methylacridone, nifedipine, camphorquinone, carbon tetrabromide, etc. Two or more of them can also be contained.

In the removing agent used in this invention, with regard to the content of the acid with a boiling point of 80°C or higher or the compound capable of generating an acid by external energy, it is preferred that the content as mass percentage of it in the constituents other than the solvent is 1 to 80 mass% . Above all, it is preferred that the content as mass percentage of the acid with a boiling point of 80°C or higher in the constituents other than the solvent is 10 to 70 mass% . A more preferred range is 20 to 70 mass%. Further, it is preferred that the content of the compound capable of generating an acid by external energy is 0.1 to 70 mass% in the constituents other than the solvent. However, the amount of the compound is not limited in this range and can be selected, as appropriate, in reference to the molecular weight of the compound, the amount of the generated acid or base, the material and thickness of the conductive layer to be removed, heating temperature and heating time.

The removing agent used in this invention contains a solvent. Examples of the solvent include acetic acid esters such as ethyl acetate and butyl acetate, ketones such as acetone, acetophenone, ethyl methyl ketone and methyl isobutyl ketone, aromatic hydrocarbons such as toluene, xylene and benzyl alcohol, alcohols such as methanol, ethanol, 1,2-propanediol, terpineol, acetyl terpineol, butyl carbitol, ethyl cellosolve, ethylene glycol, triethylene glycol, tetraethylene glycol and glycerol, ethylene glycol monoalkyl ethers such as triethylene glycol monobutyl ether, ethylene glycol dialkyl ethers, diethylene glycol monoalkyl ether acetates, ethylene glycol monoaryl ethers, polyethylene glycol monoaryl ethers, propylene glycol monoalkyl ethers, dipropylene glycol dialkyl ethers, propylene glycol monoalkyl ether acetates, ethylene carbonate, propylene carbonate, γ-butyrolactone, solvent naphtha, water, N-methylpyrrolidone, dimethyl sulfoxide, hexamethylphosphoric triamide, dimethylethyleneurea, N,N'-dimethylpropyleneurea, tetramethylurea, etc. Two or more of them can also be contained.

In this invention, it is preferred that the content of the solvent is 1 mass% or more in the removing agent. More preferred is 30 mass% or more, and further more preferred is 50 mass% or more. If the content of the solvent is 1 mass% or more, the flowability of the removing agent can be enhanced to further enhance the coating properties. On the other hand, it is preferred that the content is 99.9 mass% or less. More preferred is 95 mass% or less. If the content of the solvent is 99.9 mass% or less, the flowability at the time of heating can be kept in an adequate range, and a desired pattern can be maintained precisely.

The removing agent used in this invention contains a resin. If a resin is contained, a removing agent with non-Newtonian flowability can be obtained and can be easily coated on the conductive laminated body by a publicly known method. Further, the flowability of the removing agent at the time of heat treatment can be limited to enhance the accuracy of coating position. Examples of the resin include polystyrene resin, polyacrylic resin, polyamide resin, polyimide resin, polymethacrylic resin, melamine resin, urethane resin, benzoguanamine resin, phenol resin, silicone resin, fluorine resin, etc. Two or more of them can also be contained. Among them, if a nonionic, anionic, amphoteric, cationic or other hydrophilic resin is contained, washing can be easily performed using water, or a basic aqueous solution described later or an organic solvent aqueous solution, to inhibit the residue on the removed surface and to further enhance the in-plane uniformity.

Examples of the hydrophilic resin include such compounds as polyvinyl pyrrolidone, hydrophilic polyurethane, polyvinyl alcohol, polyethyl oxazoline, polyacrylic acid, gelatin, hydroxyalkyl guar, guar gum, locust bean gum, carrageenan, alginic acid, gum arabic, pectin, xanthan gum, cellulose, ethyl cellulose, hydroxypropyl cellulose, carboxymethyl cellulose, carboxymethyl-hydroxyethyl cellulose sodium, acrylamide copolymer, polyethyleneimine, polyamine sulfonium, polyvinylpyridine, polydialkylaminoethyl methacrylate, polydialkylaminoethyl acrylate, polydialkylaminoethyl methacrylamide, polydialkylaminoethyl acrylamide, polyepoxyamine, polyamidoamine, dicyanediamide-formalin condensation product, polydimethyldiallylammonium chloride, polyaminepolyamide epichlorohydrin, polyvinylamine and polyacrylamine, and modification products thereof, etc.

Among them, a cationic resin hard to be modified by an acid or under a high temperature condition and highly dissolvable in a polar solvent is more preferred. Owing to the maintained high dissolvability, in the step of removing the conductive layer by washing with a liquid after completion of heat treatment, the conductive layer can be removed in a short time. Meanwhile, examples of the cationic resin include such compounds as polydialkylaminoethyl methacrylate, polydialkylaminoethyl acrylate, polydialkylaminoethyl methacrylamide, polydialkylaminoethyl acrylamide, polyepoxyamine, polyamideamine, dicyanediamide-formalin condensation product, polydimethyldiallylammonium chloride, guar hydroxypropyl trimonium chloride, polyaminepolyamide epichlorohydrin, polyvinylamine, polyallylamine, polyacrylamide, polyquaternium-4, polyquaternium-6, polyquaternium-7, polyquaternium-9, polyquaternium-10, polyquaternium-11, polyquaternium-16, polyquaternium-28, polyquaternium-32, polyquaternium-37, polyquaternium-39, polyquaternium-51, polyquaternium-52, pblyquaternium-44, polyquaternium-46, polyquaternium-55 and polyquaternium-68, modification products thereof, etc. For example, polyquaternium-10 has trimethylammonium groups at the ends of side chains. Under an acidic condition, the trimethylammonium groups are cationized, and due to the action of electrostatic repellence, high dissolvability is shown. Further, the dehydration polycondensation by heating is hard to occur, and even after heating, high solvent dissolvability is maintained. For this reason, in the step of removing the conductive layer by washing with a liquid, the conductive layer can be removed in a short time.

In the case where a resin is used in the removing agent of this invention, it is preferred that the content of the resin is 0.01 to 80 mass% in the constituents other than the solvent. In order to keep low the heating temperature required for removing the conductive layer and to shorten the heating time, it is more preferred that the resin content in the removing agent is very small within the range for maintaining non-Newtonian flowability. It is preferred that the viscosity of the removing agent is approx. 2 to approx. 500 Pa·S (25°C), and a uniform coating film can be easily formed by a screen printing method. The viscosity of the removing agent can be adjusted, for example, by adjusting the contents of the solvent and the resin.

It is preferred that the removing agent used in this invention contains a leveling agent. Since the leveling agent contained gives high permeation power to the removing agent, even a conductive layer containing fibrous conductors can be easily removed. As the leveling agent, a compound with a nature of lowering the surface tension of the removing agent to less than 50 mN/m is preferred. Examples of the leveling agent include acrylic compounds and acrylic resins such as modified polyacrylates, vinyl-based compounds and vinyl-based resins having double bonds in the molecular skeleton, silicone-based compounds and silicone-based resins having alkyloxysilyl groups and/or polysiloxane skeleton, etc., fluorine-based compounds and fluorine-based resins having fluorinated alkyl groups and/or fluorinated phenyl groups, etc. Any of these leveling agents can be selectively used, as appropriate, depending on the material and polar state of the protective layer surface, but fluorine-based compounds and fluorine-based resins having fluorinated alkyl groups and/or fluorinated phenyl groups, etc. can be especially preferably used, since the capability to lower the surface tension is strong. Meanwhile, in this invention, even a polymer compound is classified as a leveling agent if it is a compound with a nature of lowering the surface tension to less than 50 mN/m.

In the removing agent used in this invention, it is preferred that the content of the leveling agent is 0.001 to 10 mass% in the constituents other than the solvent in view of surface activities such as wettability to the conductive layer and leveling property and the balance with the acid content of the obtained coating film. A more preferred range is 0.01 to 5 mass%, and a further more preferred range is 0.05 to 3 mass%.

In this invention, in the case where an acid with a boiling point of 80°C or higher or a compound capable of generating an acid by external energy is contained, it is preferred that a nitrate or nitrite is further contained. In the reaction between the acid and the conductive component, the reaction rate may depend on the acid and the conductive component used, as the case may be, but if a nitrate or nitride is contained, the acid and the nitrate or nitrite react with each other at the time of heat treatment, to produce nitric acid in the system. Therefore, the dissolution of the conductive component can be further accelerated. For this reason, the conductive layer can be removed by heat treatment of a short time. Examples of the nitrate include lithium nitrate, sodium nitrate, potassium nitrate, calcium nitrate, ammonium nitrate, magnesium nitrate, barium nitrate and hydrates of those nitrates. Examples of the nitrite include sodium nitrite, potassium nitrite, calcium nitrite, silver nitrite, barium nitrite, etc. Two or more of them can also be contained. Among them, considering the reaction rate for producing nitric acid, etc., a nitrate is preferred, and sodium nitrate or potassium nitrate is more preferred.

In response to the objects, the removing agent used in this invention may contain inorganic fine particles of titanium oxide, alumina, silica or the like, a thixotropic agent capable of giving thixotropy, antistatic agent, defoaming agent, viscosity adjusting agent, light-resistant stabilizer, anti-weathering agent, heat-resistant agent, anti-oxidant, rust preventive, slipping agent, wax, releasing agent, compatibilizing agent, dispersing agent, dispersion stabilizer, rheology control agent, etc.

In this invention, the constituents constituting the protective layer are not especially limited. However, it is preferred to select the constituents and film thickness for ensuring that if the thickness of the protective layer removed by coating the protective layer with a removing agent containing an acid component and having a pH of 2.0 at 130°C for 3 minutes is (X), the protective layer may have portions thicker than (X) and portions thinner than (X) . The constituents of the protective layer include organic or inorganic polymer compounds, etc.

The inorganic polymer compounds include inorganic oxides, etc., for example, silicon oxides including tetraalkoxysilanes such as tetramethoxysilane, tetraethoxysilane, tetra-n-propoxysilane, tetra-i-propoxysilane and tetra-n-butoxysilane, trialkoxysilanes such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-pentyltriethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, N-(2-aminoethyl)-3-aminopropyltrimethoxysilane, N-(2-aminoethyl)-3-aminopropyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-isocyanatopropyltrimethoxysilane, 3-isocyanatopropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, 3-ureidopropyltrimethoxysilane, 3-ureidopropyltriethoxysilane, vinyltrimethoxysilane, vinyltriethoxysilane, allyltrimethoxysilane and vinyltriacetoxysilane, sol-gel coating films formed by hydrolysis/polymerization reaction from the alcohol of an organoalkoxysilane such as methyltriacetyloxysilane or methyl triphenoxysi lane, water, acid, etc. , vapor deposition films formed by sputtering silicon oxides, etc.

The organic polymer compounds include thermoplastic resins, thermosetting resins, photocurable resins, etc. and can be selected, as appropriate, in view of visible light transmittance, the heat resistance of the substrate, glass transition point, film hardness, etc. Examples of these resins include organic polymer compounds including polyester resins such as polyethylene terephthalate and polyethylene naphthalate, polycarbonate resins, acrylic resins, methacrylic resins, epoxy resins, polyamide resins such as nylon and benzoguanamine, ABS resins, polyimide resins, olefin resins such as polyethylene and polypropylene, polystyrene resins, polyvinyl acetate resins, melamine resins, phenol resins, resins containing chlorine element (Cl element) such as polyvinyl chloride and polyvinylidene chloride, resins containing fluorine element (F element), silicon resins, etc., and other inorganic compounds. At least any one of the foregoing is selected as desired in reference to requested properties, productivity, etc., or two or more of them can also be used as a mixture. However, it is preferred to use a polymer compound not containing any of S element, P element, metal element, metal ion and the N element constituting a functional group. S element, P element or N element may have an electron pair in capable of being bound to another element in view of the electron orbit situation thereof or may form a functional group having an ionic bond with a metal ion (for example, -ONa, -COONa, -SO₃Na, etc.), and a metal element may form a coordination bond. It is estimated that the electron pair incapable of being bound to another element, ionic bond or coordination bond easily acts on the acid component in the removing agent, and that the bond with the element to which the S element, P element, metal element, metal ion or the N element constituting a functional group is bound may be easily cut/cleaved, and that as a result, the acid resistance of the protective layer to the aforementioned removing agent may decline. Therefore, it is preferred to use a polymer compound not containing any of S element, P element, metal element, metal ion and the N element constituting a functional group for such reasons that acid resistance is likely to be given, that the thickness of the protective layer can be thinned, and that the acid component of the removing agent can be easily changed. Examples of the polymer compound not containing any of S element, P element, metal element, metal ion and the N element constituting a functional group include the acrylic resins, methacrylic resins, resins containing fluorine element (F element), silicone resins, etc. included in the aforementioned organic polymer compounds, and at least one of them can be selected as desired in response to requested properties, productivity, etc. or two or more can also be used as a mixture, the polymer compound not being especially limited thereto or thereby. In view of optical properties such as transparency, good resistance to the acid component in the removing agent and the like and further for the reasons described later, a polyfunctional acrylic polymer compound or polyfunctional methacrylic polymer compound can be preferably used.

In this invention, it is preferred that the surface of the protective layer laminated on the conductive layer has a pure water contact angle of 80° or more and an oleic acid contact angle of 13° or more. The reasons are described below.

In addition to the acid component used for removing the conductive component, the removing agent contains a binder, solvent and the like as other constituents than the removing component, and depending on the types of the constituents used, the polarity of the removing agent changes. In the case where the polarity changes, even if the removing agent is transferred onto the surface of an ordinary conductive laminated body by screen printing or the like, the removing agent wets and spreads, making it difficult to obtain a desired pattern, or thickening the pattern (for example, the straight lines of a pattern may become thicker than desired straight lines), and the unevenly wetting and spreading removing agent does not allow a beautiful pattern to be formed.

In this regard, it is estimated that the wetting and spreading of the removing agent of any polarity can be inhibited if contact angles as indicators of the surface wettability of the protective layer laminated on the conductive layer are specified as follows:
(1) the wetting and spreading of the component showing polarity close to that of the aqueous component in the removing agent can be inhibited if the pure water contact angle is 80° or more, and
(2) the wetting and spreading of the component showing polarity close to that of the organic solvent component (oil component) in the removing agent can be inhibited if the oleic acid contact angle is 13° or more, and further
(3) the wetting and spreading of the removing agent showing the intermediate polarity corresponding to that of the mixture consisting of the aqueous component and the organic solvent component (oil component) can be inhibited.
Thus, it is estimated that the removing agent can be finely and beautifully transferred/laminated onto the conductive laminated body, to form a desired pattern irrespective of the polarity of the removing agent. In the case where the surface of the protective layer has at least either a pure water contact angle of less than 80° or an oleic acid contact angle of less than 13°, if the removing agent is transferred/laminated onto the conductive laminated body, the removing agent may wet and spread, not allowing a desired pattern to be obtained, or thickening the pattern, and the unevenly wetting and spreading removing agent may not form a beautiful pattern. On the other hand, if the surface of the protective layer has a pure water contact angle of 80° or more and an oleic acid contact angle of 13° or more, it can inhibit the wetting and spreading irrespective of the polarity of the removing agent, and a fine and beautiful pattern as desired can be formed. In this connection, the contact angle refers to the value θ calculated when a liquid droplet is allowed to stand on the protective layer side of the conductive laminated body of this invention installed horizontally according to the sessile droplet method of JIS R 3257 (1999). In this invention, pure water and oleic acid are used respectively to form the aforementioned liquid droplet. The contact angle of pure water is employed as the indicator of the surface wettability of the component showing the polarity close to that of the aqueous component in the removing agent, and the contact angle of oleic acid is employed as the indicator of the surface wettability of the component showing polarity close to that of the organic solvent component (oil component).

The contact angle of pure water on the protective layer side in this invention depends on the constituents of the protective layer and the like, and consequently it is preferred that the contact angle is 80° or more, though it cannot be simply limited. Since a fine and beautiful pattern can be formed without thickening or unevenness compared with a desired pattern, preferred is 85° or more. More preferred is 90° or more, and further more preferred is 93° or more. Meanwhile, the upper limit is not especially specified, but 100° or less is preferred, since otherwise the removing agent may cause transfer defects/lamination defects such as repellence, depending on the type and constituents of the removing agent, the method of transferring/laminating onto the conductive laminated body, etc. The contact angle of oleic acid on the protective layer side in this invention depends on the constituents of the protective layer and the like, and therefore it is preferred that the contact angle is 13° or more, though it cannot be simply limited. Since a fine and beautiful pattern can be formed without thickening or unevenness compared with a desired pattern, preferred is 30° or more. More preferred is 40° or more, and further more preferred is 45° or more. Meanwhile, the upper limit is not especially specified, but 70° or less is preferred, since the removing agent may cause transfer defects/lamination defects such as repellence, depending on the type and constituents of the removing agent, the method of transferring/laminating onto the conductive laminated body, etc. With regard to the method for ensuring that the surface of the protective layer in this invention may have a pure water contact angle of 80° or more and an oleic acid contact angle of 13° or more, an additive may be added to constitute the protective layer together with the aforementioned organic or inorganic polymer compound contained as a constituent of the protective layer in order to comply with the respective contact angle ranges. However, the additive may bleed out or may inhibit the curing reaction of the polymer compound. Accordingly it is preferred to select a polymer compound complying with the respective contact angle ranges from among the polymer compounds usable as the constituents of the protective layer, and to use the compound alone for constituting the protective layer. Examples of the additive include a low-molecular compound/monomer/oligomer or the like containing fluorine element (F element), and a silicone-based low-molecular compound/monomer/oligomer resin, etc. Further, any of these additives may exist as a mixture with the compound usable as a constituent of the protective layer or may be partially bound to the polymer compound usable as a constituent of the protective layer, though the additive is not especially limited thereto or thereby, only if the respective contact angle ranges can be complied with. Further, the polymer compound usable as a constituent of the protective layer, which *per* se complies with the respective contact angle ranges, can be a thermoplastic resin, thermosetting resin, photocurable resin or the like, and can be selected as appropriate in view of visible light transmittance, the heat resistance of the substrate, glass transition temperature, film hardness, etc. Examples of these resins include a polyester resin such as polyethylene terephthalate or polyethylene naphthalate, polycarbonate resin, acrylic resin, methacrylic resin, epoxy resin, olefin resin such as polyethylene or polypropylene, polystyrene resin, polyvinyl acetate resin, phenol resin, resin containing chlorine element (Cl element) such as polyvinyl chloride or polyvinylidene chloride, resin containing fluorine element (F element) (for example, resin containing fluorine element (F element) in the structure of a resin such as polyester resin, acrylic resin, methacrylic resin, epoxy resin or olefin resin such as polyethylene or polypropylene), silicone resin (straight chain silicone resin, general silicone resin, a copolymer comprising a straight chain silicone resin or general silicone resin and another resin, a copolymer with graft structure, a modified silicone resin having various functional groups introduced into such structures as silicone molecular chain ends, molecular chains or branched chains of the copolymer comprising the aforementioned straight chain silicone resin/the aforementioned general silicone resin/the aforementioned other resin and the copolymer with graft structure), etc. At least one of them is selected in response to the requested properties, productivity and the like, or two or more of them can also be used as a mixture, the polymer compound not being especially limited thereto or thereby. However, in view of the easiness to comply with the aforementioned respective contact angles, a resin containing fluorine element (F element) or a silicone resin is preferred. Further, in view of optical properties such as transparency and for the reasons described later, a polyfunctional acrylic polymer compound or polyfunctional methacrylic polymer compound can be preferably used. Furthermore in this invention, it is especially preferred that the aforementioned polymer compound has a crosslinked structure, since the acid resistance of the protective layer can be further enhanced. The crosslinked structure in this invention refers to a state where the bonds of the constituents forming the protective layer are three-dimensionally connected. If the polymer compound has a crosslinked structure, it is estimated that the bonds of the constituents forming the protective layer become dense to reduce the free space (free volume) of the protective layer, and as a result, that the permeation of the acid component from the removing agent into the protective layer can be inhibited, and therefore that the acid resistance of the protective layer per se can be further enhanced. With regard to the effect owing to the crosslinked structure, irrespective of whether the polymer compound is organic or inorganic, the acid resistance of the protective layer can be similarly enhanced. However, if an inorganic polymer compound has a crosslinked structure, flexibility and bendability decline to make the protective layer fragile compared with an organic polymer compound, and brittle fracture is likely to occur depending on the handling method and the like at the time of production. Therefore, the crosslinked structure of an organic polymer compound is most preferred.

As the method for making an organic polymer compound have a crosslinked structure, a polyfunctional monomer or polyfunctional oligomer can be heated to be cured or can also be irradiated with an active electron beam such as ultraviolet light, visible light or electron beam, to be photocured. In the case of thermosetting, heat energy is the driving force of curing reaction, and consequently if a monomer or oligomer is made more polyfunctional, the reaction takes time, and any measure such as elongating the curing time may be necessary as the case may be. On the other hand, in the case of photocuring, a photo-initiator is contained and is irradiated with the aforementioned active electron beam, to generate an initiation species that easily causes a reaction to progress like chain reaction, and therefore for such reasons as short curing time, photocuring is more preferred.

In this description, a photo-initiator is a substance that absorbs an active electron beam such as light of ultraviolet region, light of visible region or electron beam, to produce an active species such as radical species, cationic species or anionic species as the reaction initiation species, to initiate the reaction of the polymer compound.

In the present invention, in view of the type of the aforementioned active electron beam used, one photo-initiator only can also be used alone, but it is preferred to select and use two or more photo-initiators, the maximum absorption wavelengths of which are different from each other by 20 nm or more.

The reason is explained below. For example, in the case where the initiation species is a radical species, a radical species is very highly reactive, but on the other hand, owing to the high reactivity, before it reacts with a polyfunctional monomer or polyfunctional oligomer, the oxygen in the air may act to inactivate radicals as the case may be. In this case, the curing reaction does not progress as expected, and the crosslinked structure of the polymer compound may be insufficient as the case may be. In order to avoid the inhibition by oxygen, any measure may be necessary such as substituting the atmosphere by an inert gas such as nitrogen or argon, or employing an atmosphere obtained by removing oxygen. If such a special atmosphere is employed, enormous equipment is required disadvantageously in view of productivity and cost. Therefore, if the curing reaction can progress sufficiently to form the crosslinked structure even in air, stable production at low cost can be made, and in addition, a conductive laminated body with high quality can be presented. In this situation, the inventors found that if the photo-initiators to be mixed have maximum absorption wavelength values different from each other by 20 nm or more, the curing reaction can progress sufficiently as in a special atmosphere even in air.

Meanwhile, the maximum absorption wavelength in this description is the wavelength at the maximum value of the absorption spectrum obtained by ultraviolet-visible spectrophotometry (UV-Vis) when a photo-initiator is dissolved in a soluble solvent. Further, in the case where there are multiple maximum values, the maximum absorption wavelength should be as described below. Among the multiple maximum values existing in a range from 200 to 400 nm in the absorption spectrum obtained with an optical path length of 1 cm, the wavelength at the maximum value corresponding to the largest absorbance should be the maximum absorbance wavelength. In this case, if the concentration of the photo-initiator is too high when it is dissolved in a solvent, the aforementioned maximum value corresponding to the largest absorbance exceeds the detection limit of the instrument used, and it may be observed as if the aforementioned maximum value corresponding to the largest absorbance does not exist. Therefore, the concentration of the photo-initiator should be changed as appropriate for measurement, and the wavelength at the maximum value corresponding to the relatively largest absorption at each concentration should be employed as the maximum absorption wavelength. In the case where,the difference between the maximum absorption wavelength values is less than 20 nm, there is a region where the absorption bands of the mixed photo-initiators superimpose each other, and in this case, it is estimated that the effect obtained is equivalent to the effect obtained when only one photo-initiator is used. However, an emitter such as a lamp capable of emitting the aforementioned active electron beam actually does not emit a single wavelength only, but emits various wavelengths. Consequently if two or more photo-initiators having maximum absorption wavelength values different from each other by 20 nm or more are mixed, a wider region of wavelengths can be absorbed, and as a result, the emitted active electron beams can be efficiently captured and used for allowing the curing reaction to progress sufficiently even in air. Consequently in the case where three or more photo-initiators are contained and where the differences between the maximum absorption wavelength values of these photo-initiators are respectively 20 nm or more, a further higher effect can be obtained.

Examples of usable photo-initiators include benzophenone-based compounds such as benzophenone, hydroxybenzophenone and 4-phenylbenzophenone, benzoin-based compounds such as benzyl dimethyl ketal, α-hydroxyketone-based compounds such as 1-hydroxy-cyclohexyl-phenyl-ketone, 2-hydroxy-2-methyl-1-phenylpropane-1-one, 2-methyl-1-[4-(methylthio)phenyl]-2-morpholinopropane-1-one and 2-benzyl-2-dimethylamino-1-(4-morpholinophenyl)-butanone-1, thioxanthone-based compounds such as isopropylthioxanthone and 2-4-diethylthioxanthone, methyl phenyl glyoxylate, etc. In view of the value of maximum absorption wavelength, absorbance, color viewing, degree of pigmentation, etc., photo-initiators selected from the foregoing can be preferably used. Examples of preferably used commercially available products include Ciba (registered trademark) IRGACURE (registered trademark) 184 (produced by Ciba Japan K.K.) as 1-hydroxy-cyclohexyl-phenyl-ketone, Ciba (registered trademark) IRGACURE (registered trademark) 907 (produced by Ciba Japan K.K.) as 2-methyl-1-[4-(methylthio)phenyl]-2-morpholinopropane-1-one, Ciba(registered trademark) IRGACURE (registered trademark) 369 (produced by Ciba Japan K.K.), as 2-benzyl-2-dimethylamino-1-(4-morpholinophenyl)-butanone-1, etc.

It is preferred that the conductive laminated body of this invention is a transparent conductive laminated body with a total light transmittance of 80% or more based on JIS K 7361-1 (1997) in the case where light falls on the aforementioned conductive layer side. The touch panel in which the conductive laminated body of this invention is assembled as a transparent conductive laminated body shows excellent transparency, and the image presented by the display provided as an underlying layer of the touch panel using the transparent conductive laminated body can be vividly recognized. The transparency in this invention means that the total light transmittance based on JIS K 7361-1 (1997) in the case where light falls on the aforementioned conductive layer side is 80% or more. Preferred is 85% or more, and more preferred is 90% or more. Examples of the method for enhancing the total light transmittance include a method of enhancing the total light transmittance of the substrate used, a method of reducing the thickness of the aforementioned conductive layer, a method of laminating the protective layer in such a manner that the protective layer may become an optical interference film, and so on.

The method for enhancing the total light transmittance of the substrate can be a method of reducing the thickness of the substrate or a method of selecting a material with a high total light transmittance for the substrate. As the substrate of the transparent conductive laminated body of this invention, a substrate with a high total visible light transmittance can be suitably used, and specifically a substrate with transparency of 80% or more as the total light transmittance based on JIS K 7361-1 (1997) can be used. More preferred is a substrate with transparency of 90% or more. Specifically, for example, a transparent resin, glass or the like can be used, and even a windable film with a thickness of 250 µm or less or a substrate with a thickness of more than 250 µm can be used if the total light transmittance is in the abovementioned range. In view of cost, productivity, handling properties, etc., a resin film of 250 µm or less is preferred. Especially preferred is 190 µm or less, and further preferred is 150 µm or less. The resin can be a polyester such as polyethylene terephthalate (PET) or polyethylene naphthalate (PEN), polyimide, polyphenylene sulfide, aramid, polypropylene, polyethylene, polylactic acid, polyvinyl chloride, polycarbonate, polymethyl methacrylate, alicyclic acrylic resin, cycloolefin resin, triacetyl cellulose, or a mixture and/or copolymer of these resins. For example, the resin can be non-stretched, monoaxially stretched or biaxially stretched to form a film. Among these substrates, in view of moldability into a substrate, optical properties such as transparency, productivity, etc., a polyester film of polyethylene terephthalate (PET) or polyethylene naphthalate (PEN), etc., a PET film mixed and/or copolymerized with PEN and a polypropylene film can be preferably used.

As glass, ordinary soda glass can be used. Further, these multiple substrates can also be used in combination. For example, a composite substrate such as a substrate obtained by combining a resin and glass or a substrate obtained by laminating two or more resins can also be used. Furthermore, a substrate treated on the surface, as required, can also be used. The surface treatment can be physical treatment such as glow discharge, corona discharge, plasma treatment or flame treatment, or can also be the provision of a resin layer. In the case of a film, a film with an adhesive layer can also be used. The type of the substrate is not limited to those described above, and an optimum substrate can be selected in response to the application in view of transparency, durability, flexibility, cost, etc.

The method for laminating a protective layer in such a manner that the protective layer may be an optical interference film is explained below.

A conductive layer reflects or absorbs light owing to the physical properties of the conductive component *per* se Consequently, in order to raise the total light transmittance of the transparent conductive laminated body containing the conductive layer provided on a substrate, it is effective that the protective layer is formed to be an optical interference film using a transparent material, and that the average reflectance on the optical interference film side in a wavelength range from 380 to 780 nm is lowered to 4% or less. Preferred is 3% or less, and more preferred is 2% or less. It is preferred that the average reflectance is 4% or less, since the performance of 80% or more total light transmittance in the case where the conductive laminated body is used for touch panel application or the like can be obtained at good productivity.

It is preferred that the conductive laminated body of this invention has a surface resistance value of 1 x 10°Ω/ to 1 x 10⁴Ω/ on the conductive layer side thereof irrespective of the conductive component composed of the linear structures. A more preferred range is 1 x 10¹Ω/ to 1.5 x 10³Ω/. If the surface resistance value is in this range, the conductive laminated body can be preferably used for a touch panel. That is, if the surface resistance value is 1 x 10°Ω/ or more, the power consumption can be kept small, and if it is 1 x 10⁴Ω/ or less, the influence on the error in a touch panel digitizer can be lessened.

As the method for forming the protective layer on the conductive layer, it is only required to select an optimum method in response to the material formed. Dry methods such as vacuum deposition, EB deposition and sputtering, wet coating methods such as casting, spin coating, dip coating, bar coating, spraying, blade coating, slit die coating, gravure coating, reverse coating, screen printing, mold coating, print transfer and ink jet, and other general methods can be used. Among them, a slit die coating capable of laminating the protective layer uniformly and unlikely to flaw the conductive layer or a wet coating method using micro gravure capable of forming the protective layer uniformly at good productivity are preferred.

To the substrate and/or the respective layers of this invention, various additives can be added to such an extent that the effects of this invention are not impaired. Examples of the additives include organic and/or inorganic fine particles, crosslinking agent, flame retarder, flame retardant aid, heat-resistant stabilizer, oxidation-resistant stabilizer, leveling agent, slip activator, conductive agent, antistatic agent, ultraviolet light absorber, photo stabilizer, nucleating agent, dye, filler, dispersing agent, coupling agent, etc.

The method for producing the removing agent used in this invention is explained below in reference to an example. At first, a resin is added to a solvent, and the mixture is sufficiently stirred for dissolution. The stirring can be performed with heating, and for the purpose of raising the dissolution rate, it is preferred to stir at 50 to 80°C. Then, an acid with a boiling point of 80°C or higher or a compound capable of generating an acid by external energy, a leveling agent, and as required, the aforementioned additives are added, and the mixture is stirred. The addition methods and addition order are not especially limited. The stirring can be performed with heating, and for the purpose of raising the dissolution rates of the additives, it is preferred to stir at 50 to 80°C.

The method for forming a pattern in the conductive laminated body of this invention by chemical etching using a removing agent is explained below in reference to an example. The protective layer side of the conductive laminated body of this invention is coated with the removing agent at the portions to be removed. Since the removing agent used in this invention has non-Newtonian flowability, a publicly known method can be used for coating irrespective of the type, size and form of the conductive laminated body. Examples of the coating method include screen printing method, dispenser method, stencil printing method, pad printing method, spray coating, ink jet method, micro gravure printing method, knife coating method, spin coating method, slit coating method, roll coating method, curtain coating method flow coating method, etc., though not limited to these methods. Further, in order to decrease the etching irregularity of the conductive layer, it is preferred to uniformly coat the protective layer of the conductive laminated body with the removing agent.

The coating thickness of the removing film is decided, as appropriate, in reference to the material and thickness of the conductive layer to be removed, heating temperature and heating time, but it is preferred to coat to ensure that the thickness after drying may be 0.1 to 200 µm. A more preferred range is 2 to 200 µm. If the thickness of the removing agent after drying is kept in the aforementioned range, the coating film contains a required amount of the conductive layer removing component, and the conductive layer can be removed more uniformly in the plane. Further, since the sags in the horizontal direction can be inhibited at the time of heating, a designed pattern free from the shift of coating film border lines can be obtained.

Then, the conductive laminated body coated with the removing agent is heat-treated at 80°C or higher. It is preferred that the heat treatment temperature is lower than the boiling points of the other constituents than the solvent of the removing agent. Preferred is 200°C or lower. If heat treatment is performed in the aforementioned temperature range, the conductive layer is decomposed, dissolved or solubilized in the portions coated with the removing agent. The heat treatment method can be selected in response to the purpose and application. For example, a hot plate, hot air oven, infrared oven, microwave irradiation with a frequency of 300 megahertz to 3 terahertz and the like can be used, though the method is not limited thereto or thereby.

After completion of heat treatment, the removing agent and the decomposed/dissolved matter of the conductive layer are removed by washing with a liquid, to obtain a desired conductive pattern. The liquid used in the washing step is a liquid capable of dissolving the resin contained in the removing agent. Examples of the liquid include ketones such as acetone, alcohols such as methanol, organic solvents such as tetrahydrofuran, an aqueous solution containing any of the aforementioned organic solvents, a basic aqueous solution containing sodium hydroxide, ethanolamine, triethylamine or the like, pure water, etc., though the liquid is not limited thereto or thereby. In order to wash without leaving residues in the washing step, the aforementioned liquid may be heated to 25 to 100°C when used.

Fig. 3 is a typical sectional view showing an example of the touch panel of this invention. The touch panel of this invention is mounted with the conductive laminated body of this invention shown in Fig. 1, in which a conductive layer having a network structure composed of linear structures and a protective layer are laminated, or with multiple conductive laminated bodies each being said conductive laminated body, in combination with other members. Examples of the touch panel include a resistance film touch panel, capacitance touch panel, etc. The conductive layer of the conductive laminated body of this invention forms a network structure containing linear structures as indicated by symbols 5, 6, 7 and 8 in Fig. 2 and having contact points between the linear structures overlying each other as indicated by symbols 10, 11 and 12. In the touch panel mounted with the conductive laminated bodies of this invention, the conductive laminated bodies (13) of this invention, each being the conductive laminated body having conductive regions and nonconductive regions, are laminated and bonded via bonding layers of an adhesive, tackifier or the like as shown in Fig. 3. Further, for example, the touch panel having lead wires and a drive unit attached thereto is assembled at the front surface of a liquid crystal display, when used.

### EXAMPLES

This invention is specifically explained below based on examples, though this invention is not limited thereto or thereby. At first, the evaluation methods used in the examples and comparative examples are explained.

### (1) Average thickness (t) of a protective layer

The nearby region including the portion to be observed, of a sample was encapsulated with ice and frozen and secured, or encapsulated with a material stronger in securing force than ice such as an epoxy resin and was then cut in the direction perpendicular to the film surface using a rotary microtome produced by Nihon Microtome Kenkyusho K.K. having a diamond knife set at a knife inclination angle of 3°. Subsequently the obtained cross section of the film was observed using a field emission scanning electron microscope (JSM-6700-F produced by JEOL Ltd.) at an accelerating voltage of 3.0 kV at respective observation magnifications of 10, 000 to 100, 000x by adequately adjusting the image contrast. From each obtained photograph of the cross section, given five places each of t1 (the thickness of the protective layer in a portion where the linear structures did not exist) and t2 (the thickness of the protective layer laid on the top of a single linear structure or the top of an aggregate consisting of linear structures) were measured likewise at a given observation magnification (calculated from the magnifications), and the values were averaged.

### (2) Diameter (r) of a linear structure

A field emission scanning electron microscope (JSM-6700-F produced by JEOL Ltd.) was used to observe a cross section as in (1) by adequately adjusting the image contrast between the portions of linear structures and the portions where the linear structures were not laminated, for determination. In this case, in a portion where a single linear structure existed, the diameter (r) referred to the symbol (28) shown in Fig. 4, being a straight distance from the top of the linear structure in the direction perpendicular to the substrate. In a portion where linear structures existed as an aggregate, the diameter (r) referred to symbol (29) shown in Fig. 4, being a straight distance from the top of the aggregate consisting of linear structures to the bottom of the aggregate in the direction perpendicular to the substrate. Likewise, observation was made at given five places, and the mean value of five places was employed as the diameter (r) of the linear structure(s). Meanwhile, with regard to the relative magnitude between (r) and (t), in the case of cross section observation, the diameter (r) of the linear structure(s) was decided and compared with the (t) obtained in (1). In the case of surface observation, the same place was observed in all the directions corresponding to the observation angles of 20°, 30°, 45° and 90°. (just above), to confirm the swelling at each portion of the linear structure (s).

In the case where observation was difficult with the aforementioned method, a color 3D laser microscope (VK-9710 produced by Keyence Corporation) was used to observe the surface at the same position on the protective layer side at respective magnifications using accessory standard objective lenses 10X (CF IC EPI Plan 10X produced by Nikon Corporation), 20X (CF IC EPI Plan 20X produced by Nikon Corporation), 50X (CF IC EPI Plan Apo 50X produced by Nikon Corporation) and 150X (CF IC EPI Plan Apo 150XA produced by Nikon Corporation), and from the image data, image analysis was performed using an observation application (VK-HV1 produced by Keyence Corporation), to confirm the swelling of the portion of the linear structure(s) from the difference between the height of the portion of the linear structure (s) and the height of the portion where the linear structures were not laminated.

In the case where observation was still difficult, an atomic force microscope (Nanoscope III produced by Digital Instruments) was used for observation using silicon monocrystal as the cantilever in the tapping mode as the scanning mode at a temperature of 25°C and at a relative humidity of 65% RH as the test environment, to confirm the swelling of the portion of linear structure(s) from the portion of linear structure(s) and the portion where linear structures were not laminated.

### (3) Determination of the thickness of a protective layer relative to the removed thickness (X) of the protective layer

Whether a protective layer had portions thicker than and portions thinner than the thickness (X) of the protective layer removed by a removing agent was determined by the following method.

At first, the conductive layer side (protective layer side) of the conductive laminated body described in any one of examples and comparative examples was observed according to the same method as that described in (1) or (2), to confirm whether or not the protective layer was laminated on the conductive layer.

Then, the removing agent described later was prepared and screen-printed on the conductive laminated body described in any one of the examples and comparative examples at the same positions as the aforementioned observed portions using a sus#500-mesh screen in such a manner that the film thickness of the removing agent after drying might be 2.4 µm. The printed pattern was straight lines with a line length of 5 cm and line widths of 50 µm, 100 µm, 200 µm and 500 µm. After having been coated with the removing agent, the printed conductive laminated body was placed in an infrared oven and heat-treated at 130°C for 3 minutes. It was taken out of the oven and allowed to cool to room temperature, and subsequently the deposited removing agent and decomposition product were removed by washing with pure water of 25°C for 1 minute. Further, the aforementioned substrate was drained by compressed air and dried in an infrared oven at 80°C for 1 minute, to obtain a conductive laminated body in which the conductive layer was patterned.

The patterned portions (the same positions as the aforementioned observed portions) of the conductive laminated body having the patterned conductive layer were observed by the same method as that described in (1) or (2) or by a scanning transmission electron microscope (Hitachi Scanning Transmission Electron Microscope HD-2700 produced by Hitachi High-Technologies Corporation), to confirm whether or not the conductive component and the protective layer remained.
The determination of the thickness of the protective layer relative to the removed thickness (X) of the protective layer was made according to the following criteria. Determination as "accepted" (the protective layer had portions thicker than the removed thickness (X) and portions thinner than (X))
● In the case where the protective layer remained while the conductive component did not remain, determination as "accepted" was made.
● In the case where the protective layer remained, the protective layer remained since the portion of symbol (21) shown in Fig. 4 was thicker than the removed thickness (X). That is, it means that the protective layer had portions thicker than (X).
● In the case where the conductive component did not remain, the portions indicated by symbols (22) and (23) shown in Fig. 4 had existed as portions thinner than the removed thickness (X). Accordingly the thin portions were removed, and the removing agent permeated from the portions and contacted the conductive component, to remove the conductive component. Therefore, in the case where the conductive component did not remain, it means that the protective layer had portions thinner than the removed thickness (X).
Determination as "rejected type 1" (the protective layer had only the portions thicker than the removed thickness (X) and did not have portions thinner than (X))
● In the case where both the conductive component and the protective layer remained, determination as "rejected type 1" was made.
● In the case where not only the protective layer but also the conductive component remained, the removing agent did not reach the conductive component. That is, the portions indicated by symbols (22) and (23) in Fig. 4 had existed as portions thicker than the removed thickness (X), and the protective layer did not have portions thinner than (X). Consequently the conductive component remained. Therefore, it means that the protective layer had only portions thicker than the removed thickness (X) and did not have portions thinner than (X).
Determination as "rejected type 2" (the protective layer had only portions thinner than the removed thickness (X) and did not have portions thicker than (X))
● In the case where neither the conductive component nor the protective layer remained, determination as "rejected type 1" was made.
● In the case where neither the conductive component nor the protective layer remained, the entire protective layer was removed by the removing component. That is, the portion indicated by (21) shown in Fig. 4 had existed as a portion thinner than the removed thickness (X), and since the protective layer did not have portions thicker than (X), the protective layer did not remain. Therefore, it means that the protective layer had only portions thinner than the removed thickness (X) and did not have portions thicker than (X).

### (4) Evaluation of the pattern formed by chemical etching

As the evaluation on the fineness of a pattern, in the pattern of straight lines described later, evaluation was made in reference to the following three indicators (a) to (c). Line width of the pattern obtained by printing the removing agent
● Line width of the removing agent transferred/laminated on a conductive laminated body
● A thinner line width indicates that a finer pattern was transferred/laminated on the conductive laminated body, and a thicker line width indicates a coarser pattern.
Line width of the etched pattern
● Line width of etched portions after washing the removing agent transferred/laminated on the conductive laminated body with water
● As in (a) mentioned above, a thinner line width indicates that a finer pattern was transferred/laminated on the conductive laminated body, and a thicker line width indicates a coarser pattern.
Line straightness (line bending) at the etched border portions of an etched pattern
● Standard deviation (σ) of the line widths obtained in (b) mentioned above
● A smaller standard deviation (σ) indicates a more highly precise and beautiful pattern.

At first, the conductive layer side (protective layer side) of the conductive laminated body described in any one of examples and comparative examples was observed by the same method as that described in (1) and (2), to confirm whether or not the protective layer was laminated on the conductive layer.

Then, the removing agent described later was prepared and screen-printed on the conductive laminated body described in any one of the examples and comparative examples at the same positions as the aforementioned observed portions using a sus#500-mesh screen in such a manner that the film thickness of the removing agent after drying might be 2.4 µm. The printed pattern was straight lines with a line length of 5 cm and line widths of (i) 50 µm and (ii) 100 µm. After having been coated with the removing agent, the printed conductive laminated body was placed in an infrared oven and heat-treated at 130°C for 3 minutes. It was taken out of the oven and allowed to cool to room temperature, to obtain a conductive laminated body having the removing agent transferred/laminated in a straight line pattern. Then, on each of the straight lines of (i) and (ii) of the pattern on the conductive laminated body having the removing agent transferred/laminated thereon, eight places of 0.5 cm, 1 cm, 1.5 cm, 2 cm, 2.5 cm (middle point of the line), 3 cm, 3.5 cm and 4 cm (1 cm from the other end of the line length) respectively from one end of the line length were observed using a color 3D laser microscope (VK-9710 produced by Keyence Corporation) by changing the magnification as desired using accessory standard objective lenses 10X (CF IC EPI Plan 10X produced by Nikon Corporation), 20X (CF IC EPI Plan 20X produced by Nikon Corporation), 50X (CF IC EPI Plan Apo 50X produced by Nikon Corporation) and 150X (CF IC EPI Plan Apo 150XA produced by Nikon Corporation). Then, the image data of the respective straight lines of (i) and (ii) of the pattern were image-analyzed using an observation application (VK-HV1 produced by Keyence Corporation), to obtain the maximum value and the minimum value of the line width at each position (each of the aforementioned eight places), and the mean value of 16 points in total was calculated as aforementioned "(a) Line width of the pattern obtained by printing the removing agent."

Subsequently the conductive laminated body with the removing agent transferred/laminated thereon was washed using pure water of 25°C for 1 minute, to remove the deposited removing agent and decomposition product. Further, the aforementioned substrate was drained by compressed air and dried in an infrared oven at 80°C for 1 minute, to obtain a conductive laminated body with the conductive layer patterned.

The same positions (the aforementioned eight places) as the aforementioned observed portions of the patterned portions of the conductive laminated body with the conductive layer patterned were observed likewise, and the mean value of 16 points in total was employed as the aforementioned " (b) Line width of the etched pattern." Further, from the 16 points in total, the standard deviation (σ) was calculated.

### (5) Durability to heat

The conductive laminated body with the conductive layer patterned obtained in (3) was heated at 130°C for 30 minutes in a thermostatic safety oven with a safety door (SPHH-201 produced by ESPEC Corp.), and the surface of the patterned portions was observed by an optical microscope (ECLIPSE-L200 produced by Nikon Corporation) before and after heating, to observe whether or not the oligomer was generated on the surface of the patterned portions. Meanwhile, the generation of the oligomer was determined in reference to whether or not the speckles or a speckle pattern which had not existed before heating existed after heating. In the case where the oligomer could not be observed using the aforementioned optical microscope, scanning electron microscope ABT-32 produced by TOPCON Corporation was used to observe the surface likewise, to confirm whether or not the oligomer was generated. In the case where the generation of the oligomer was not observed at ten given points, the conductive laminated body was accepted.

### (6) Electric insulation of patterned portions

The 1 cm portions from both the ends of each straight line length were cut off from the conductive laminated body having the conductive layer patterned in (3), and a conductive laminated body of 3 cm x 10 cm partitioned by etching lines was obtained. The probes of an insulation resistance tester (EA709DA-1 produced by Sanwa Denki Keiki K.K.) were applied to the right side and left side of an etching line. In the case where a resistance of 10 MΩ or more was indicated with DC 25 V applied, the conductive laminated body was accepted, and in the case where a resistance of less than 10 MΩ was indicated, the conductive laminated body was rejected.

### (7) Whether or not the conductive component remained in the patterned portions

The patterned portions of the conductive laminated body with the conductive layer patterned in (3) were observed by the same method as that described in (1) or (2) or by a scanning transmission electron microscope (Hitachi Scanning Transmission Electron Microscope HD-2700 produced by Hitachi High-Technologies Corporation).

In the case where the conductive component determined in (9) described later could not be confirmed, the conductive laminated body was accepted (the conductive component did not remain), and in the case where the same could be confirmed (the conductive component remained), the conductive laminated body was rejected.

### (8) Identification of contained elements, structure and binding mode of the compound of a protective layer

For the contained elements of the compound in a protective layer, the structure (polymer structure, etc.) of the compound and the biding mode (crosslinking, etc.), at first, the surface of the conductive layer side or protective layer side of the conductive laminated body was decided by any of the methods described in (1) through (3). Then, as required, separation/refining into individual substances was performed using any general chromatography typified by silica gel column chromatography, gel permeation chromatography, liquid high-performance chromatography, gas chromatography and the like or any other method allowing separation/refining, or as appropriate, concentration or dilution was made.

Then, the contained elements, structure and binding mode of the compound in the protective layer were identified/analyzed by, as appropriate, selecting/combining methods from dynamic secondary ion mass spectrometry (Dynamic-SIMS), time-of-flight secondary ion mass spectrometer (TOF-SIMS), further static secondary ion mass spectrometry (Static-SIMS), nuclear magnetic resonance spectroscopy (¹H-NMR, ¹³C-NMR, ²⁹Si-NMR, ¹⁹F-NMR), two-dimensional nuclear magnetic resonance spectrometry (2D-NMR), infrared spectrometry (IR), Raman spectrometry, mass spectrometry (Mass), X-ray diffractometry (XRD), neutron diffractometry (ND), low energy electron diffraction (LEED), reflection high energy electron diffraction (RHEED), atomic absorption spectrometry (AAS), ultraviolet photoelectron spectrometry (UPS), auger electron spectrometry (AES), X-ray photoelectron spectrometry (XPS), X-ray fluorescence (XRF) spectrometry, inductively coupled plasma atomic emission spectrometry (ICP-AES), electron probe micro-analyzer (EPMA), gel permeation chromatography (GPC), transmission electron microscope-energy dispersive x-ray spectrometry (TEM-EDX), scanning electron microscope-energy dispersive X-ray spectrometry (SEM-EDX), and other elemental analyses.

### (9) Determination of linear structures (structure of conductive component), and network state of linear structures

The surface of the conductive layer side of a sample was observed by the same method as that described in (1) or (2) by a scanning transmission electron microscope (Hitachi Scanning Transmission Electron Microscope HD-2700 produced by Hitachi High-Technologies Corporation) . In the case where the observation could not be made by surface observation, the individual constituents of the conductive layer were separated and refined by any one of the methods as in (8). Subsequently, after the material corresponding to the conductive component was collected by a sufficient amount, it was observed likewise to determine the linear structures (structure of the conductive component).

### (10) Difference between the maximum absorption wavelengths of photo-initiators

The individual constituents of the protective layer were separated and refined by any of the methods described in (8), and among the respective constituents, only the compounds corresponding to photo-initiators were extracted. In the case where whether or not the constituents corresponded to photo-initiators was unknown, they were irradiated with an active electron beam, and the constituents that generated any one species of radical species, cationic species and anionic species were identified as photo-initiators. Then, each of the photo-initiators was dissolved into any of various soluble solvents. Subsequently the solution was placed in a quartz cell, and the absorption spectrum in a wavelength range from 200 to 900 nm was measured using a ultraviolet-visible spectrometer (UV-Bis Spectrophotometer V-660 produced by JASCO Corporation), to obtain the maximum absorption wavelength.

For each photo-initiator, the absorption spectrum was measured three times similarly, to obtain maximum absorption wavelengths, and the mean value was employed as the maximum absorption wavelength of the photo-initiator. The difference between the maximum absorption wavelengths of the respective photo-initiators was obtained.

Meanwhile, in the case where there are multiple maximum values, the maximum absorption wavelength should be decided as described below. Among the multiple maximum values existing in a range from 200 to 400 nm in the absorption spectrum obtained with an optical path length of 1 cm, the wavelength at the maximum value corresponding to the largest absorbance should be the maximum absorbance wavelength. In this case, if the concentration of the photo-initiator is too high when it is dissolved in a solvent, the aforementioned maximum value corresponding to the largest absorbance exceeds the detection limit of the instrument used, and it may be observed as if the aforementioned maximum value corresponding to the largest absorbance does not exist. Therefore, the concentration of the photo-initiator should be changed as appropriate for measurement, and the wavelength at the maximum value corresponding to the relatively largest absorption at each concentration should be employed as the maximum absorption wavelength.

### (11) Surface resistance value R₀

The surface resistance value of the conductive layer side was measured at the central portion of a 100 mm x 50 mm sample by an eddy current method using a non-contact resistivity meter (NC-10 produced by NAPSON Corporation). The mean value of five samples was calculated and employed as the surface resistance value R₀ [Ω/]. In the case where the surface resistance value could not be obtained due to excess of detection limit, the following method was used for measurement.

A high resistivity meter (Hiresta-UP MCP-HT450 produced by Mitsubishi Chemical Corporation) was used to measure at the central portion of a 100 mm x 100 mm sample according to a double ring method by connecting a ring probe (URS probe, MCP-HTP14 produced by Mitsubishi Chemical Corporation). The mean value of five samples was calculated and employed as the surface resistance value R₀ [Ω/].

### (12) Total light transmittance

Turbidity meter (cloudiness meter) NDH2000 (produced by Nippon Denshoku Industries Co., Ltd.) was used to measure the total light transmittance in the thickness direction of a conductive laminated body according to JIS K 7361-1 (1997) by allowing light to fall on the conductive layer side. The mean value was calculated from the measured values of five samples and employed as the total light transmittance.

### (13) Whether or not the removal marks of the non-remaining conductive component existed in the nonconductive regions

The patterned portions of a conductive laminated body with the conductive layer patterned in (3) was observed by the same method as that described in (1) or (2) or by a scanning transmission electron microscope (Hitachi Scanning Transmission Electron Microscope HD-2700 produced by Hitachi High-Technologies Corporation).

In the case where the removal marks determined by the method of (9) mentioned before could be confirmed, the sample was accepted, and in the case where the removal marks could not be confirmed, the sample was rejected.

### (14) Contact angle on the surface of the protective layer side

The contact angle was measured according to the sessile droplet method of JIS R 3257 (1999). A conductive laminated body of this invention was placed horizontally on a sample base with the conductive layer side (protective layer side) determined by (9) as the test surface, and pure water was dropped to obtain the contact angle by using a contact angle meter (FACE Contact Angle Meter CA-X (image processing type) produced by Kyowa Interface Science Co., Ltd.). Contact angles were obtained at given 10 places in total by the same method, and the mean value of the ten places was employed as the contact angle of pure water in this invention. Then, by the same method, oleic acid (produced by NACALAI TESQUE, INC.) was dropped at other given 10 places by the same method, and the mean value of the ten places was employed as the contact angle of oleic acid in this invention.

The materials used as the protective layers of the respective examples and comparative examples are shown below. The protective layers were laminated on the conductive layers by the respective methods described in the examples and comparative examples.

### (1) Protective layer material A

● Straight chain acrylic resin (phoret GS-1000, solid concentration 30 mass%, produced by Soken Chemical & Engineering Co., Ltd.)(an organic polymer compound not containing any of S element, P element, metal element, metal ion and the N element constituting a functional group, and not having a crosslinked structure)

### (2) Protective layer material B

● Polyfunctional acrylic resin composition (Fulcure HC-6, solid concentration 51 mass%, produced by Soken Chemical & Engineering Co., Ltd.)(an organic polymer compound not containing any of S element, P element, metal element, metal ion and the N element constituting a functional group, and capable of forming a crosslinked structure by a photo-initiator)

### (3) Protective layer material C

● Polyfunctional acrylic resin composition (Fulcure UAF-1, solid concentration 48.4 mass%, produced by Soken Chemical & Engineering Co., Ltd.) (an organic polymer compound not containing any of S element, P element, metal element, metal ion and the N element constituting a functional group, and containing F element (fluorine element), and capable of forming a crosslinked structure by a photo-initiator)

### (4) Protective layer material D

● Polyfunctional acrylic resin composition (Pholucid No. 420C (old article No. Aulex JU-114), solid concentration 70 mass%, produced by Chugoku Marine Paints, Ltd.) (an organic polymer compound not containing any of S element, P element, metal element, metal ion and the N element constituting a functional group, having alkyl side chains, and capable of forming a crosslinked structure by a photo-initiator)

### (5) Protective layer material E

● Polyfunctional urethane acrylate resin composition (Artresin UN-904M, solid concentration 80 mass%, produced by Negami Chemical Industrial Co., Ltd.) (an organic polymer compound not containing any of S element, P element, metal element, metal ion and the N element constituting a functional group, containing N element in the skeleton structure, and capable of forming a crosslinked structure by a photo-initiator)

### (6) Protective layer material F

● Polyfunctional acrylic resin composition (Fulcure HCE-022, solid concentration 52.1 mass%, produced by Soken Chemical & Engineering Co., Ltd.) (an organic polymer compound containing the N element constituting a functional group, and capable of forming a crosslinked structure by a photo-initiator)

### (7) Protective layer material G

● Straight chain acrylic resin (polymerized as described below, solid concentration 100 mass%) (an organic polymer compound containing S element and not having a crosslinked structure)
● Copolymerized from acrylamide t-butyl sulfonic acid (another name: 2-acrylamide-2-methyl propane sulfonic acid) and methyl methacrylate (MMA) (another name: methyl 2-methyl-2-propenoate).

### (8) Protective layer material H

● Straight chain acrylic resin (polymerized as described below, solid concentration 100 mass%) (an organic polymer compound containing S element and metal ions and not having a crosslinked structure)
● Copolymerized from acrylamide t-butyl sulfonic acid sodium salt (another name: 2-acylamide-2-methyl propane sulfonic acid sodium salt) and methyl methacrylate (MMA) (another name: methyl 2-methyl-2-propenate).

### (9) Protective layer material I

● Polyfunctional acrylic resin composition (produced as described below, solid concentration 40 mass%) (an organic polymer compound containing P element, and capable of forming a crosslinked structure by a photo-initiator)
● A resin composition was obtained by the same method as that of Example 1 of JP 2008-222848 A. This resin composition contained the additive A of the following (13).

### (10) Protective layer material J

o Inorganic silicon oxide (silica) composition (produced as described below, solid concentration 3 mass%) (an inorganic polymer composition not containing any of S element, P element, metal element, metal ion and the N element constituting a functional group, and capable of forming a crosslinked structure by heat)
● A 100 mL polyethylene (or polypropylene) vessel was charged with 20 g of ethanol, and 40 g of n-butyl silicate was added. The mixture was stirred for 30 minutes and then 10 g of 0.1N hydrochloric acid aqueous solution was added. Subsequently the mixture was stirred for 2 hours (hydrolysis reaction) and stored at 4°C. Next day, the solution was diluted by isopropyl alcohol/toluene/n-butanol mixed solution (mixing ratio by mass 2/1/1), to have a solid concentration of 3.0 mass%.

### (11) Protective layer material K

● Acrylic resin (Phoret SBH01, solid concentration 57 mass%, produced by Soken Chemical & Engineering Co., Ltd.) (an organic polymer compound not containing any of S element, P element, metal element, metal ion and the N element constituting a functional group, and capable of forming a crosslinked structure with a polyfunctional isocyanate by heat)

### (12) Protective layer material L

● Epoxy resin composition (DIC Fine EN-0270, solid concentration 20 mass%, produced by DIC K.K.) (an organic polymer compound not containing any of S element, P element, metal element, metal ion and the N element constituting a functional group, containing N element in the skeleton structure, and capable of forming a crosslinked structure with a melamine/formaldehyde resin composition by heat)

### (13) Protective layer material M

● Polyester-based urethane resin composition (HYDRAN AP-40N, solid concentration 35 mass%, produced by DIC K.K.) (an organic polymer compound not containing any of S element, P element, metal element, metal ion and the N element constituting a functional group, containing N element in the skeleton structure, and capable of forming a crosslinked structure with a melamine/formaldehyde resin composition by heat)

### (14) Protective layer material N

● Polyfunctional acrylic resin composition (Fulcure UAF-6, solid concentration 50.9 mass%, produced by Soken Chemical & Engineering Co., Ltd.) (an organic polymer compound not containing any of S element, P element, metal element, metal ion and the N element constituting a functional group, and capable of forming a crosslinked structure by a photo-initiator)

### (15) Additive A

o Photopolymerization initiator (Ciba (registered trademark) IRGACURE (registered trademark) 184 produced by Ciba Japan K.K.)
● Maximum absorption wavelength 240 nm

### (16) Additive B

o Photopolymerization initiator (Ciba (registered trademark) IRGACURE (registered trademark) 907 produced by Ciba Japan K.K.) o Maximum absorption wavelength 300 nm

### (17) Additive C

● Photopolymerization initiator (Ciba (registered trademark) IRGACURE (registered trademark) 369 produced by Ciba Japan K.K.)
● Maximum absorption wavelength 320 nm

### (18) Additive D

● Photopolymerization initiator (Ciba (registered trademark) IRGACURE (registered trademark) 651 produced by Ciba Japan K.K.)
● Maximum absorption wavelength 250 nm

### (19) Additive E

● Biuret type HDI (hexamethylene diisocyanate) polyfunctional isocyanate (Desmodur N3200, solid concentration 100 mass%, produced by Sumika Bayer Urethane K.K.) (a heat crosslinking curing agent containing N element)

### (20) Additive F

● Melamine/formaldehyde resin composition (Beckamine APM, solid concentration 80 mass%, produced by DIC K.K.)

### (21) Additive G

● Organic low molecular compound containing F element (fluorine element) (OPTOOL DAC (registered trademark), solid concentration 20 mass%, produced by Daikin Industries, ltd.)(a heat crosslinking curing agent containing N element)

The conductive layers used in the respective examples and comparative examples are described below. The conductive layers were laminated on the substrates of the examples and comparative examples by the methods described below.

### (1) Conductive layer A "needle-like silicon dioxide-based ATO (antimony-doped tin oxide) composite compound conductive layer"

The aforementioned protective layer material A (acrylic resin) as the binder component and needle-like silicon dioxide-based ATO (antimony-doped tin oxide) composite compound (Dentol TM100, minor axis length 700 to 900 nm, major axis length 15 to 25 µm, produced by Otsuka Chemical Co., Ltd.) as the conductive component were mixed to achieve of a conductive component content of 60 mass% based on the entire solid content (mixing ratio of solid contents: binder component/conductive component = 40 mass%/60 mass%), and ethyl acetate was added to the mixed solution, to achieve a solid paint concentration of 50 mass%, for dilution and concentration adjustment, thereby obtaining a needle-like silicon dioxide-based ATO (antimony-doped tin oxide) composite compound-dispersed coating solution. A substrate was coated with the needle-like silicon dioxide-based ATO (antimony-doped tin oxide) composite compound-dispersed coating solution using a slit die coater mounted with shims made of SUS (thickness of shims 100 µm), and dried at 120°C for 5 minutes, to form a needle-like silicon dioxide-based ATO (antimony-doped tin oxide) composite compound coating film.

### (2) Conductive layer B "silver nanowire conductive layer"

Silver nanowires (minor axis length 50 to 100 nm, major axis length 20 to 40 µm) were obtained by the method disclosed in JP 2009-505358 A (Example 1 Synthesis of silver nanowires). Then, a silver nanowire-dispersed coating solution was obtained by the method disclosed in the same JP 2009-505358 A (Example 8 Dispersion of nanowires). The silver nanowires-dispersed coating solution was adjusted in concentration to achieve a silver nanowire content of 0.05 mass% based on the amount of the entire coating solution. A substrate was coated with the concentration-adjusted silver nanowire-dispersed coating solution using a slit die coater mounted with shims made of SUS (thickness of shims 50 µm), and dried at 120°C for 2 minutes, to form a silver nanowire coating film.

### (3) Conductive layer C "CNT conductive layer"

### (Preparation of a catalyst)

Two point four five nine grams of ammonium iron citrate (green) (produced by Wako Pure Chemical Industries, Ltd.) was dissolved into 500 mL of methanol (produced by Kanto Chemical Co. , Inc.). To the solution, 100 g of light magnesia (produced by Iwatani Chemical Industry Co., Ltd.) was added, and the mixture was stirred at room temperature for 60 minutes. While it was stirred at 40°C to 60°C, it was dried under reduced pressure to remove methanol, for obtaining a catalyst in which light magnesia powder was loaded with the metal salt.

### (Production of a CNT composition)

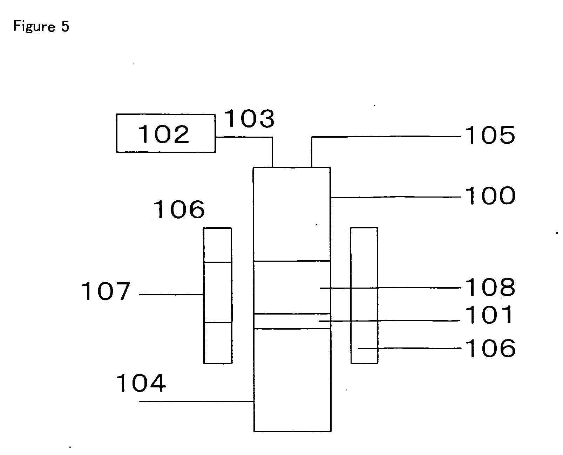

In the fluidized bed vertical reaction device shown in the schematic drawing of Fig. 5, CNTs were synthesized. The reactor (100) was a cylindrical quartz pipe with an inner diameter of 32 mm and a length of 1,200 mm. At the central portion, a sintered quartz plate (101) was provided, and below in the quartz pipe, an inert gas and raw gas supply line (104) was provided, while above in the quartz pipe, an exhaust gas line (105) and a catalyst introduction line (103) were provided. Further, in order that the reactor could be kept at a given temperature, a heater (106) was provided to surround the circumference of the reactor. The heater (106) was provided with an inspection port (107) so that the fluidized state in the device could be confirmed.

Twelve grams of the aforementioned catalyst (108) produced as described in the "Preparation of a catalyst" was set on the sintered quartz plate (101) via the catalyst introduction line (103) from an enclosed catalyst supply unit (102). Then, argon gas began to be supplied via the raw gas supply line (104) at 1, 000 mL/min. After the reactor was filled with argon gas atmosphere, the temperature was heated to 850°C.

After reaching 850°C, the temperature was maintained, and the argon flow rate of the raw gas supply line (104) was raised to 2,000 mL/min, to initiate the fluidization of the solid catalyst on the sintered quartz plate. After the fluidization was confirmed from the heating furnace inspection port (107), the supply of methane into the reactor at 95 mL/min was further started. After the mixed gas was supplied for 90 minutes, the argon gas only was supplied, to complete the synthesis.

Heating was stopped, and the reaction mixture was allowed to stand till the temperature reached room temperature, and after room temperature was reached, the CNT composition containing the catalyst and the CNTs was taken out of the reactor.

Twenty three point four grams of the abovementioned catalyst-containing CNT composition was placed on a porcelain dish, and heated at 446°C for 2 hours in air in a muffle furnace (FP41 produced by Yamato Scientific Co., Ltd.) heated in advance to 446°C, and subsequently taken out of the muffle furnace. Then in order to remove the catalyst, the CNT composition was added to 6N hydrochloric acid aqueous solution, and the mixture was stirred at room temperature for 1 hour. It was filtered, and the obtained residue was further added to 6N hydrochloric acid aqueous solution, the mixture being stirred at room temperature for 1 hour. It was filtered, and the residue was washed with water several times, then dried in an oven of 120°C overnight, to obtain 57.1 mg of the CNT composition free from magnesia and the metal. By repeating the abovementioned operation, 500 mg of the CNT composition free from magnesia and the metal was prepared.

Then, 80 mg of the CNT composition remaining after removing the catalyst by heating in the muffle furnace was added to 27 mL of concentrated nitric acid (first grade assay 60-61%, produced by Wako Pure Chemical Industries, Ltd.), and the mixture was stirred while being heated in an oil bath of 130°C for 5 hours. After completion of heating and stirring, the CNT-containing nitric acid solution was filtered, and the residue was washed with distilled water, to obtain 1,266.4 mg of a wet CNT composition containing water.

### (CNT-dispersed coating solution)

A 50 mL vessel was charged with 10 mg (as dried) of the abovementioned CNT composition and 10 mg of carboxymethyl cellulose sodium (90 kDa, 50-200 cps, produced by Sigma) as a dispersing agent, and distilled water was added to make 10 g in total. The mixture was treated to be dispersed with ice cooling by an ultrasonic homogenizer at an output of 20 W for 20 minutes, to prepare a CNT coating solution. The obtained solution was centrifuged by a high speed centrifuge at 10, 000 G for 15 minutes, to obtain 9 mL of a supernatant solution. This operation was repeated multiple times, to obtain 145 mL of a supernatant solution. Five milliliters of ethanol was added to the supernatant solution, to obtain a CNT-dispersed coating solution with a CNT concentration of approx. 0.1 mass% capable of being applied by a coater (the mixing ratio of CNTs and the dispersing agent was 1 : 1). Quartz glass was coated with the CNT-dispersed coating solution and dried, and the refractive index of the CNT conductive layer was 1.82.

### (Formation of a CNT conductive layer)

A substrate was coated with the aforementioned CNT-dispersed coating solution by a micro-gravure coater (gravure cell count 150R, gravure revolution ratio 80%) and was dried at 100°C for 1 minute, to form a CNT coating film (minor axis length 10 to 30 nm, major axis length 1 to 5 µm as CNT aggregates in the CNT coating film).

### (4) Conductive layer D "needle-like ATO (antimony-doped tin oxide) conductive layer"

The aforementioned protective layer material A (acrylic resin) as the binder component and needle-like ATO (antimony-doped tin oxide, needle-like transparent conductive material FS-10P, minor axis length 10 to 20 nm, major axis length 0.2 to 2 µm, produced by Ishihara Sangyo Kaisha, Ltd.) as the conductive component were mixed to achieve of a conductive component content of 60 mass% based on the amount of the entire solid content (mixing ratio of solid contents: binder component/conductive component = 40 mass%/60 mass%), and subsequently ethyl acetate was added to the mixed solution to achieve a solid paint concentration of 20 mass%, for dilution and concentration adjustment, thereby obtaining a needle-like ATO (antimony-doped tin oxide)-dispersed coating solution. A substrate was coated with the needle-like ATO (antimony-doped tin oxide) -dispersed coating solution using a bar coater #12 produced by Matsuo Sangyo K.K., and dried at 120°C for 2 minutes, to form a needle-like ATO (antimony-doped tin oxide) coating film.

### (5) Conductive layer E "copper nanowire conductive layer"

Copper nanowires (minor axis length 10 to 20 nm, major axis length 1 to 100 µm) were obtained by the method disclosed in JP 2002-266007 A. Then, a copper nanowire-dispersed coating solution was obtained by the same method as that disclosed in JP 2009-505358 A, except that silver nanowires were changed to the copper nanowires of this invention. The copper nanowire-dispersed coating solution was adjusted in concentration, to achieve a copper nanowire content of 0.05 mass% based on the amount of the entire coating solution. A substrate was coated with the concentration-adjusted copper nanowire-dispersed coating solution using a slit die coater mounted with shims made of SUS (thickness of shims 50 µm), and dried at 120°C for 2 minutes, to form a copper nanowire coating film.

### (6) Conductive layer F "silver nanoparticle conductive layer"

A silver nanoparticle (minor axis length and major axis length (particle size) 9 to 15 nm) dispersion was obtained by the method disclosed in Example ((2) Preparation of a silver nanocolloid coating solution) of JP 2001-243841 A. Then, a silver nanoparticle dispersion was coated by the method disclosed in "Examples 1 to 8" of the same JP 2001-243841 A, to obtain a silver nanoparticle coating film.

### (7) Conductive layer G "silver nanowire/silver nanoparticle mixed conductive layer"

The silver nanowire-dispersed coating solution obtained by the method disclosed in Example 8 (nanowire dispersion) of JP 2009-505358 A was mixed with the silver nanoparticle dispersion obtained by the method disclosed in Example ((2) Preparation of a silver nanocolloid coating solution) of JP 2001-243841 A, to achieve a ratio by mass of silver nanoparticles to silver nanowires of silver nanoparticles/silver nanowires = 8/2, for obtaining a silver nanowire/silver nanoparticle mixed dispersion. Then, a substrate was coated with the silver nanowire/silver nanoparticle mixed dispersion by the method disclosed in "Examples 1 to 8" of the same JP 2001-243841 A, to obtain a silver nanowire/silver nanoparticle-mixed coating film.

### (8) Conductive layer H "ITO (indium tin oxide) thin conductive layer"

An indium tin oxide target with a composition of In₂O_{2/}SnO₂ = 90/10 was used to form a 250 nm thick ITO (indium tin oxide) thin conductive film on a substrate under the introduction of argon/oxygen-mixed gas at a vacuum degree of 10⁻⁴ Torr by a sputtering method.

The removing agent used in the respective examples and comparative examples is described below.

A vessel was charged with 70 g of ethylene glycol (produced by Wako Pure Chemical Industries, Ltd.), 30 g of N,N'-dimethylpropyleneurea (produced by Tokyo Chemical Industry Co., Ltd.) and 5 g of sodium nitrate, and they were mixed. To the mixture, 5 g of polyquaternium-10 (produced by ISP Japan) and 0.5 g of THIXATROL MAX (a polyester amide produced by Elementis Japan K.K.) as a thixotropic agent were added, and the mixture was heated in an oil bath to 60°C with stirring for 30 minutes.

Then, the vessel was taken out of the oil bath and allowed to cool to room temperature, and subsequently 0.5 g of a leveling agent (F-555 produced by DIC K.K.) and 10 g of p-toluenesulfonic acid monohydrate (boiling point at atmospheric pressure 103 to 106°C, produced by Tokyo Chemical Industry Co., Ltd.) were added, the mixture being stirred for 15 minutes. The obtained solution was filtered by a membrane filter (Omnipore Membrane PTFE, nominal diameter 0.45 µm, produced by Millipore K.K.), to obtain a removing agent.

### (Example 1)

A 125 µm thick polyethylene terephthalate film, LUMIRROR (registered trademark) U46 (produced by Toray Industries, Inc.) as a substrate was laminated with the "conductive layer A" on one surface thereof.

Then, 296 g of the "protective layer material A" and 704 g of "ethyl acetate" were mixed and stirred, to produce a protective layer coating solution. The aforementioned "conductive layer A" was coated with the protective layer coating solution using a slit die coater mounted with shims made of SUS (thickness of shims 50 µm), and dried at 120°C for 2 minutes, to form a 950 nm thick protective layer, thus obtaining a conductive laminated body of this invention.

### (Example 2)

A 800 nm thick protective layer was formed to obtain a conductive laminated body of this invention by producing a protective layer coating solution as described in Example 1, except that the composition of the protective layer coating solution was 500 g of the "protective layer material A" and 1,500 g of "ethyl acetate."

### (Example 3)

A 125 µm thick polyethylene terephthalate film, LUMIRROR (registered trademark) U46 (produced by Toray Industries, Inc.) as a substrate was laminated with the "conductive layer B" on one surface thereof.

Then, 150 g of the "protective layer material B," 3.60 g of the "additive A," 7.15 g of the "additive B" and 1,907 g of "ethyl acetate" were mixed and stirred to produce a protective layer coating solution. The aforementioned "conductive layer B" was coated with the protective layer coating solution using a slit die coater mounted with shims made of SUS (thickness of shims 50 µm), dried at 120°C for 2 minutes, and subsequently irradiated with ultraviolet light at 1.2 J/cm² for curing, to form a 450 nm thick protective layer, thereby obtaining a conductive laminated body of this invention.

### (Example 4)

A 380 nm thick protective layer was formed to obtain a conductive laminated body of this invention by producing a protective layer coating solution as described in Example 3, except that the composition of the protective layer coating solution was 150 g of the "protective layer material B," 3.60 g of the "additive A," 7.15 g of the "additive B" and 2,288 g of "ethyl acetate."

### (Example 5)

A 310 nm thick protective layer was formed to obtain a conductive laminated body of this invention by producing a protective layer coating solution as described in Example 3, except that the composition of the protective layer coating solution was 150 g of the "protective layer material B," 3.60 g of the "additive A," 7.15 g of the "additive B" and 2,748 g of "ethyl acetate."

### (Example 6)

A 310 nm thick protective layer was formed to obtain a conductive laminated body of this invention by producing a protective layer coating solution as described in Example 3, except that the composition of the protective layer coating solution was 150 g of the "protective layer material C," 3.41 g of the "additive A," 6.79 g of the "additive B" and 2,600 g of "ethyl acetate."

### (Example 7)

A 310 nm thick protective layer was formed to obtain a conductive laminated body of this invention by producing a protective layer coating solution as described in Example 3, except that the composition of the protective layer coating solution was 100 g of the "protective layer material D," 3.29 g of the "additive A," 6.55 g of the "additive B" and 2,551 g of "ethyl acetate."

### (Example 8)

A 310 nm thick protective layer was formed to obtain a conductive laminated body of this invention by producing a protective layer coating solution as described in Example 3, except that the composition of the protective layer coating solution was 100 g of the "protective layer material E," 3.76 g of the "additive A" and 2,688 g of "ethyl acetate."

### (Example 9)

A 310 nm thick protective layer was formed to obtain a conductive laminated body of this invention by producing a protective layer coating solution as described in Example 3, except that the composition of the protective layer coating solution was 120 g of the "protective layer material F," 2.94 g of the "additive A," 5.85 g of the "additive B" and 2,248 g of "ethyl acetate."

### (Example 10)

A 310 nm thick protective layer was formed to obtain a conductive laminated body of this invention by producing a protective layer coating solution as described in Example 3, except that the composition of the protective layer coating solution was 117 g of the "protective layer material B," 6.63 g of the "protective layer material G, " 3.12 g of the "additive A," 6.20 g of the "additive B" and 2,388 g of "ethyl acetate."

### (Example 11)

A 310 nm thick protective layer was formed to obtain a conductive laminated body of this invention by producing a protective layer coating solution as described in Example 3, except that the composition of the protective layer coating solution was 117 g of the "protective layer material B," 6.63 g of the "protective layer material H, " 3.12 g of the "additive A, " 6.20 g of the "additive B" and 2,388 g of "ethyl acetate."

### (Example 12)

A 310 nm thick protective layer was formed to obtain a conductive laminated body of this invention by producing a protective layer coating solution as described in Example 3, except that the composition of the protective layer coating solution was 117 g of the "protective layer material B," 16.58 g of the "protective layer material I,".6.2 g of the "additive B" and 2,277 g of "ethyl acetate."

### (Example 13)

A 125 µm thick polyethylene terephthalate film, LUMIRROR (registered trademark) U46 (produced by Toray Industries, Inc.) as a substrate was laminated with the "conductive layer B" on one surface thereof.

Then, the silver nanoparticle dispersion obtained by the method disclosed in Example ((2) Preparation of a silver nanocolloid coating solution) of JP 2001-243841 A described in the aforementioned (6) Conductive layer F "silver nanoparticle conductive layer" was evaporated to dryness, to obtain silver nanoparticles.

Subsequently, 123.5 g of the "protective layer material B," 3.32 g of the "aforementioned silver nanoparticles," 3.12 g of the "additive A," 6.20 g of the "additive B" and 2,384 g of "ethyl acetate" were mixed and stirred, to prepare a protective layer coating solution. The aforementioned "conductive layer B" was coated with the protective layer coating solution using a slit die coater mounted with shims made of SUS (thickness of shims 50 µm), dried at 120°C for 2 minutes, and irradiated with ultraviolet light at 1.2J/cm² for curing, for forming a 310 nm thick protective layer, thereby obtaining a conductive laminated body of this invention.

### (Example 14)

A 310 nm thick protective layer was formed to obtain a conductive laminated body of this invention by producing a protective layer coating solution as described in Example 3, except that the composition of the protective layer coating solution was 65 g of the "protective layer material B," 68.5 g of the "protective layer material C, " 3.12 g of the "additive A, " 6.20 g of the "additive B" and 2,378 g of "ethyl acetate."

### (Example 15)

A 310 nm thick protective layer was formed to obtain a conductive laminated body of this invention by producing a protective layer coating solution as described in Example 3, except that the composition of the protective layer coating solution was 78 g of the "protective layer material B," 54.8 g of the "protective layer material C," 3.12 g of the "additive A," 6.20 g of the "additive B" and 2,378 g of "ethyl acetate."

### (Example 16)

A 310 nm thick protective layer was formed to obtain a conductive laminated body of this invention by producing a protective layer coating solution as described in Example 3, except that the composition of the protective layer coating solution was 117 g of the "protective layer material B," 9.47 g of the "protective layer material D, " 3.12 g of the "additive A," 6.20 g of the "additive B" and 2,385 g of "ethyl acetate."

### (Example 17)

A 310 nm thick protective layer was formed to obtain a conductive laminated body of this invention as described in Example 5, except that the conductive layer was the "conductive layer G."

### (Example 18)

A 310 nm thick protective layer was formed to obtain a conductive laminated body of this invention by producing a protective layer coating solution as described in Example 3, except that the composition of the protective layer coating solution was 80 g of the "protective layer material E," 3.01 g of the "additive A," 5.98 g of the "additive B" and 2,344 g of "ethyl acetate."

### (Example 19)

A 310 nm thick protective layer was formed to obtain a conductive laminated body of this invention by producing a protective layer coating solution as described in Example 3, except that the composition of the protective layer coating solution was 100 g of the "protective layer material D," 3.29 g of the "additive A," 3.27 g of the "additive B," 3.27 g of the "additive C" and 2,551 g of "ethyl acetate."

### (Example 20)

A 310 nm thick protective layer was formed to obtain a conductive laminated body of this invention as described in Example 18, except that the additive used was not the "additive B" but the "additive D."

### (Example 21)

A 310 nm thick protective layer was formed to obtain a conductive laminated body of this invention as described in Example 19, except that the additive used was not the "additive C" but the "additive D."

### (Example 22)

A 800 nm thick protective layer was formed to obtain a conductive laminated body of this invention by producing a protective layer coating solution as described in Example 1, except that the composition of the protective layer coating solution was 500 g of the "protective layer material A," 0.75 g of the "additive G" and 1,501.25 g of "ethyl acetate."

### (Example 23)

A 310 nm thick protective layer was formed to obtain a conductive laminated body of this invention by producing a protective layer coating solution as described in Example 3, except that the composition of the protective layer coating solution was 150.3 g of the "protective layer material N," 3.60 g of the "additive A," 7.15 g of the "additive B" and 2, 747 g of "ethyl acetate."

### (Example 24)

A 310 nm thick protective layer was formed to obtain a conductive laminated body of this invention by producing a protective layer coating solution as described in Example 3, except that the composition of the protective layer coating solution was 87.5 g of the "protective layer material E," 3.29 g of the "additive A," 3.27 g of the "additive B," 3.27 g of the "additive C" and 2,563 g of "ethyl acetate."

### (Example 25)

A 310 nm thick protective layer was formed to obtain a conductive laminated body of this invention by producing a protective layer coating solution as described in Example 3, except that the composition of the protective layer coating solution was 100 g of the "protective layer material D," 3.29 g of the "additive A," 3.27 g of the "additive B," 3.27 g of the "additive C" and 2,551 g of "ethyl acetate."

### (Example 26)

A 310 nm thick protective layer was formed to obtain a conductive laminated body of this invention by producing a protective layer coating solution as described in Example 3, except that the composition of the protective layer coating solution was 123.2 g of the "protective layer material C," 6.63 g of the "protective layer material H," 3.12 g of the "additive A," 6.20 g of the "additive B" and 2,382 g of "ethyl acetate."

### (Comparative Example 1)

A 125 µm thick polyethylene terephthalate film, LUMIRROR (registered trademark) U46 (produced by Toray Industries, Inc.) was used as a laminated body without forming a conductive layer and a protective layer thereon.

### (Comparative Example 2)

A 125 µm thick polyethylene terephthalate film, LUMIRROR (registered trademark) U46 (produced by Toray Industries, Inc.) as a substrate was laminated with only the "conductive layer B" on one surface thereof, without forming a protective layer, to form a conductive laminated body.

### (Comparative Example 3)

A 125 µm thick polyethylene terephthalate film, LUMIRROR (registered trademark) U46 (produced by Toray Industries, Inc.) as a substrate was laminated with only the "conductive layer C" on one surface thereof, without forming a protective layer, to form a conductive laminated body.

### (Comparative Example 4)

A 310 nm thick protective layer was formed on a conductive layer formed of a conductive component composed of nonlinear spherical structures, to obtain a conductive laminated body as described in Example 5, except that the conductive layer was the "conductive layer F."

### (Comparative Example 5)

A 310 nm thick protective layer was formed on a conductive layer formed of a conductive component composed of a nonlinear thin film structure, to obtain a conductive laminated body as described in Example 5, except that the conductive layer was the "conductive layer H."

### (Comparative Example 6)

A protective film with an average thickness (t) of 1100 nm sufficiently thick relatively to linear structures was formed to obtain a conductive laminated body as described in Example 3, except that the composition of the protective layer coating solution was 450 g of the "protective layer material B," 10.79 g of the "additive A," and 21.46 g of the "additive B" and 2,056 g of "ethyl acetate.

### (Comparative Example 7)

A 125 µm thick polyethylene terephthalate film, LUMIRROR (registered trademark) U46 (produced by Toray Industries, Inc.) as a substrate was laminated with the "conductive layer C" on one surface thereof.

Then, 50 g of the "protective layer material K" and 2,325 g of "ethyl acetate" were mixed and stirred to prepare a protective layer coasting solution. The aforementioned "conductive layer C" was coated with the protective layer coating solution by a micro gravure coater (gravure cell count 80R, gravure revolution ratio 100%), and dried at 120°C for 2 hours, to form a 75 nm thick protective layer composed of an acrylic resin not resistant against the removing agent and not having a crosslinked structure, thereby obtaining a conductive laminated body.

**[Table 1]**

| | Conductive layer | | | | Protective layer | | | | | | |
|---|---|---|---|---|---|---|---|---|---|---|---|
| | Component | Form | State | Diameter of linear structures (r) [nm] | Thickness (t) [nm] | Determination on the thickness of protective layer | Element contained in the protective layer among S element, P element, metal element, metal ion and the N element constituting a functional group ^{*1} | Whether or not a crosslinked structure is formed | Difference between the maximum absorbance wavelengths of photo-initiators [nm] | Contact angle of surface [deg] | |
| | | | | | | | | | | Water | Oleic acid |
| Example 1 | Silicon dioxide-based ATO composite compound | Linear structures (needle-like) | Network | 881 | 950 | Accepted | None | Not formed | Not contained | | |
| Example 2 | Silicon dioxide-based ATO composite compound | Linear structures (needle-like) | Network | 819 | 800 | Accepted | None | Not formed | Not contained | | |
| Example 3 | Silver | Linear structures (nanowires) | Network | 53 | 450 | Accepted | None | Formed | 60 | | |
| Example 4 | Silver | Linear structures (nanowires) | Network | 60 | 380 | Accepted | None | Formed | 60 | | |
| Example 5 | Silver | Linear structures (nanowires) | Network | 63 | 310 | Accepted | None | Formed | 60 | | |
| Example 6 | Silver | Linear structures (nanowires) | Network | 55 | 310 | Accepted | None | Formed | 60 | 98.0 | 52.4 |
| Example 7 | Silver | Linear structures (nanowires) | Network | 53 | 310 | Accepted | None | Formed | 60 | | |
| Example 8 | Silver | Linear structures (nanowires) | Network | 51 | 310 | Accepted | N element | Formed | - | | |
| Example 9 | Silver | Linear structures (nanowires) | Network | 61 | 310 | Accepted | N element constituting a functional group | Formed | 60 | | |
| Example 10 | Silver | Linear structures (nanowires) | Network | 59 | 310 | Accepted | S element | Formed | 60 | | |
| Example 11 | Silver | Linear structures (nanowires) | Network | 62 | 310 | Accepted | S element and metal ions | Formed | 60 | | |

| | | | | | | | | | | | |
|---|---|---|---|---|---|---|---|---|---|---|---|
| (*1) None = None of S element, P element, metal element, metal ion and the N element constituting a functional group is contained. | | | | | | | | | | | |

**[Table 2]**

| | Conductive laminated body | | Durability to heat | Patterning | | |
|---|---|---|---|---|---|---|
| | Surface resistance value R₀ [Ω/□] | Total light transmittanc e[%] | | Whether or not conductive component remained | Compliance with electric insulation | Whether or not removal marks of non-remaining conductive component existed |
| Example 1 | 3.3×10⁶ | 76.1 | Accepted | Accepted | Accepted | Accepted |
| Example 2 | 2.0×10⁵ | 76.3 | Accepted | Accepted | Accepted | Accepted |
| Example 3 | 585 | 90.1 | Accepted | Accepted | Accepted | Accepted |
| Example 4 | 357 | 90.7 | Accepted | Accepted | Accepted | Accepted |
| Example 5 | 235 | 91.2 | Accepted | Accepted | Accepted | Accepted |
| Example 6 | 228 | 91.5 | Accepted | Accepted | Accepted | Accepted |
| Example 7 | 241 | 91.1 | Accepted | Accepted | Accepted | Accepted |
| Example 8 | 246 | 90.7 | Accepted | Accepted | Accepted | Accepted |
| Example 9 | 254 | 90.6 | Accepted | Accepted | Accepted | Accepted |
| Example 10 | 261 | 90.2 | Accepted | Accepted | Accepted | Accepted |
| Example 11 | 259 | 90.3 | Accepted | Accepted | Accepted | Accepted |

**[Table 3]**

| | Conductive layer | | | | Protective layer | | | | | | |
|---|---|---|---|---|---|---|---|---|---|---|---|
| | Component | Form | State | Diameter of linear structures (r) [nm] | Thickness (t) [nm] | Determination on the thickness of protective layer | Element contained in the protective layer among S element, P element, metal element, metal ion and the N element constituting a functional group ^{*1} | Whether or not a crosslinked structure is formed | Difference between the maximum absorbance wavelengths of photo-initiators [nm] | Contact angle of surface [deg] | |
| | | | | | | | | | | Water | Oleic acid |
| Example 12 | Silver | Linear structures (nanowires) | Network | 53 | 310 | Accepted | P element | Formed | 60 | | |
| Example 13 | Silver | Linear structures (nanowires) | Network | 54 | 310 | Accepted | Metal element | Formed | 60 | | |
| Example 14 | Silver | Linear structures (nanowires) | Network | 58 | 310 | Accepted | None | Formed | 60 | 93.2 | 49.5 |
| Example 15 | Silver | Linear structures (nanowires) | Network | 57 | 310 | Accepted | None | Formed | 60 | 93.4 | 46.5 |
| Example 16 | Silver | Linear structures (nanowires) | Network | 60 | 310 | Accepted | None | Formed | 60 | 83.2 | 17.7 |

| | | | | | | | | | | | |
|---|---|---|---|---|---|---|---|---|---|---|---|
| (*1) None = None of S element, P element, metal element, metal ion and the N element constituting a functional group is contained. | | | | | | | | | | | |

**[Table 4]**

| | Conductive laminated body | | Durability to heat | Patterning | | |
|---|---|---|---|---|---|---|
| | Surface resistance value R₀ [Ω/□] | Total light transmittance [%] | | Whether or not conductive component remained | Compliance with electric insulation | Whether or not removal marks of non-remaining conductive component existed |
| Example 12 | 247 | 90.6 | Accepted | Accepted | Accepted | Accepted |
| Example 13 | 222 | 86.0 | Accepted | Accepted | Accepted | Accepted |
| Example 14 | 230 | 91.4 | Accepted | Accepted | Accepted | Accepted |
| Example 15 | 228 | 91.3 | Accepted | Accepted | Accepted | Accepted |
| Example 16 | 253 | 91.2 | Accepted | Accepted | Accepted | Accepted |

**[Table 5]**

| | Conductive layer | | | | Protective layer | | | | | | |
|---|---|---|---|---|---|---|---|---|---|---|---|
| | Component | Form | State | Diameter of linear structures (r) [nm] | Thickness (t) [nm] | Determination on the thickness of protective layer | Element contained in the protective layer among S element, P element, metal element, metal ion and the N element constituting a functional group ^{*1} | Whether or not a crosslinked structure is formed | Difference between the maximum absorbance wavelengths of photo-initiators [nm] | Contact angle of surface [deg] | |
| | | | | | | | | | | Water | Oleic acid |
| Example 17 | Silver | Linear structures (nanowires) | Network | 58 | 310 | Accepted | None | Formed | 60 | | |
| | Silver | Nonlinear structures (spherical) | | ― | | | | | | | |
| Example 18 | Silver | Linear structures (nanowires) | Network | 61 | 310 | Accepted | None (containing N element not constituting a functional group) | Formed | 60 | | |
| Example 19 | Silver | Linear structures (nanowires) | Network | 68 | 310 | Accepted | None | Formed | Longer wavelength side: 20 Shorter wavelength side: | | |
| Example 20 | Silver | Linear structures (nanowires) | Network | 59 | 310 | Accepted | None (containing N element not constituting a functional group) | Formed | to | | |
| Example 21 | Silver | Linear structures (nanowires) | Network | 54 | 310 | Accepted | None | Formed | Longer wavelength side: 50 Shorter wavelength side: | | |
| Example 22 | Silicon dioxide-based ATO composite compound | Linear structures (nanowires) | Network | 15 | 800 | Accepted | None | Not formed | Not contained | 85.2 | 38.6 |
| Example 23 | Silver | Linear structures (nanowires) | Network | 57 | 310 | Accepted | None | Formed | 60 | 71.0 | 13.1 |
| Example 24 | Silver | Linear structures (nanowires) | Network | 71 | 310 | Accepted | None (containing N element not constituting a functional group) | Formed | Longer wavelength side: 20 Shorter wavelength side: 60 | 69.7 | 14.5 |
| Example 25 | Silver | Linear structures (nanowires) | Network | 55 | 310 | Accepted | None | Formed | Longer wavelength side: 20 Shorter wavelength side: | 95.1 | 11.4 |
| Example 26 | Silver | Linear structures (nanowires) | Network | 62 | 310 | Accepted | S element and metal ions | Formed | 60 | 91.5 | 42.2 |

| | | | | | | | | | | | |
|---|---|---|---|---|---|---|---|---|---|---|---|
| (*1) None = None of S element, P element, metal element, metal ion and the N element constituting a functional group is contained. | | | | | | | | | | | |

**[Table 6]**

| | Conductive laminated body | | Durability to heat | Patterning | | |
|---|---|---|---|---|---|---|
| | Surface resistance value R₀ [Ω/□] | Total light transmittanc e[%] | | Whether or not conductive component remained | Compliance with electric insulation | Whether or not removal marks of non-remaining conductive component existed |
| Example 17 | 320 | 70 | Accepted | Accepted | Accepted | Accepted |
| Example 18 | 244 | 90.5 | Accepted | Accepted | Accepted | Accepted |
| Example 19 | 249 | 91.0 | Accepted | Accepted | Accepted | Accepted |
| Example 20 | 252 | 90.5 | Accepted | Accepted | Accepted | Accepted |
| Example 21 | 247 | 90.8 | Accepted | Accepted | Accepted | Accepted |
| Example 22 | 2.0×10⁵ | 76.3 | Accepted | Accepted | Accepted | Accepted |
| Example 23 | 247 | 90.8 | Accepted | Accepted | Accepted | Accepted |
| Example 24 | 244 | 90.5 | Accepted | Accepted | Accepted | Accepted |
| Example 25 | 249 | 91.0 | Accepted | Accepted | Accepted | Accepted |
| Example 26 | 256 | 90.6 | Accepted | Accepted | Accepted | Accepted |

**[Table 7]**

| | Conductive layer | | | | Protective layer | | | | | | |
|---|---|---|---|---|---|---|---|---|---|---|---|
| | Component | Form | State | Diameter of linear structures (r) [nm] | Thickness (t) [nm] | Determination on the thickness of protective layer | Element contained in the protective layer among S element, P element, metal element, metal ion and the N element constituting a functional group ^{*1} | Whether or not a crosslinked structure is formed | Difference between the maximum absorbance wavelengths of photo-initiators [nm] | Contact angle of surface [deg] | |
| | | | | | | | | | | Water | Oleic acid |
| Comparative Example 1 | Substrate only | ― | ― | - | ― | ― | ― | ― | ― | | |
| Comparative Example 2 | Silver | Linear structures (nanowires) | Network | 53 | ― | ― | ― | ― | ― | 57.1 | 32.8 |
| Comparative Example 3 | CNT | Linear structures (fibrous) | Network | 27 Diameter of aggregate(r) | ― | ― | ― | ― | ― | | |
| Comparative Example 4 | Silver | Nonlinear structures (spherical) | ― | ― | 310 | Rejected type 2 | None | Formed | 60 | 97.7 | 52.3 |
| Comparative Example 5 | ITO | Nonlinear structure (thin film) | ― | ― | 310 | Rejected type 2 | None | Formed | 60 | 97.9 | 52.4 |
| Comparative Example 6 | Silver | Linear structures (nanowires) | Network | 64 | 1100 | Rejected type 1 | None | Formed | 60 | | |
| Comparative Example 7 | CNT | Linear structures (fibrous) | Network | 27 Diameter of aggregate (r) | 75 | Rejected type 2 | None | Not formed | ― | | |

| | | | | | | | | | | | |
|---|---|---|---|---|---|---|---|---|---|---|---|
| (*1) None = None of S element, P element, metal element, metal ion and the N element constituting a functional group is contained. | | | | | | | | | | | |

**[Table 8]**

| | Conductive laminated body | | Durability to heat | Patterning | | |
|---|---|---|---|---|---|---|
| | Surface resistance value R₀ [Ω/□] | Total light transmittanc e [%] | | Whether or not conductive component remained | Compliance with electric insulation | Whether or not removal marks of non-remaining conductive component existed |
| Comparative Example 1 | Could not be measured | 91.3 | ― | ― | ― | ― |
| Comparative Example 2 | 204 | 91.1 | Rejected | Accepted | Accepted | Rejected |
| Comparative Example 3 | 650 | 82.8 | Rejected | Accepted | Accepted | Rejected |
| Comparative Example 4 | 322 | 68.1 | Rejected | Accepted | Accepted | Rejected |
| Comparative Example 5 | 250 | 89.0 | Rejected | Accepted | Accepted | Rejected |
| Comparative Example 6 | Could not be measured | 89.9 | Accepted | Rejected | Accepted | Rejected |
| Comparative Example 7 | 855 | 84.3 | Rejected | Accepted | Accepted | Rejected |

**[Table 9]**

| | Contact angle on the surface of protective layer side | | Patterning | | | | | |
|---|---|---|---|---|---|---|---|---|
| | | | Line width of printed pattern [µm] | | Line width of etched pattern [µm] | | Line straightness at etched border portions (standard deviation (σ)) [µm] | |
| | Water | Oleic acid | 50 µm pattern | 100 µm pattern | 50 µm pattern | 100 µm pattern | 50 µm pattern | 100 µm pattern |
| Comparative Example 6 | 98.0 | 52.4 | 27.3 | 37.3 | 28.4 | 38.8 | ≦10 | ≦10 |
| Comparative Example 14 | 93.2 | 49.5 | 43.0 | 61.7 | 44.8 | 64.2 | ≦20 | ≦10 |
| Comparative Example 15 | 93.4 | 46.5 | 40.2 | 100.4 | 41.8 | 104.5 | ≦10 | ≦10 |
| Comparative Example 16 | 83.2 | 17.7 | 75.6 | 141.1 | 78.6 | 146.7 | ≦20 | ≦10 |
| Comparative Example 22 | 85.2 | 38.6 | 77.5 | 148.5 | 81.4 | 155.9 | ≦20 | ≦20 |
| Comparative Example 23 | 71.0 | 13.1 | 115.3 | 179.8 | 125.6 | 196.0 | ≦20 | ≦20 |
| Comparative Example 24 | 69.7 | 14.5 | 206.1 | 271.7 | 220.6 | 288.0 | >20 | >20 |
| Comparative Example 25 | 95.1 | 11.4 | 110.0 | 197.0 | 114.4 | 204.9 | >20 | >20 |
| Comparative Example 26 | 91.5 | 42.2 | 30.7 | 42.0 | 55.2 | 79.7 | >20 | ≦20 |
| Comparative Example 2 | 57.1 | 32.8 | 278.8 | 410.4 | 334.6 | 492.5 | ≦10 | ≦10 |
| Comparative Example 4 | 97.7 | 52.3 | 30.8 | 41.1 | 55.4 | 78.1 | >20 | ≦20 |
| Comparative Example 5 | 97.9 | 52.4 | 29.6 | 38.9 | 53.3 | 73.9 | >20 | ≦20 |

In each of Examples 1, 2 and 8, the conductive component was removed to show the electric insulation, and since the resistance to the removing agent was established, the oligomer generation from the substrate due to heat could be inhibited. Especially in the case where the average thickness (t) of the protective layer was in the specific range and where the protective layer had a crosslinked structure while containing a constituent free from the specific elements (Examples 5 and 6) or while containing constituents mixed at different ratios (Examples 14 and 15) or while containing a single constituent somewhat inferior in resistance (example 7) or while containing the constituent somewhat inferior in resistance mixed with another constituent (Example 16), the protective layer obtained was good in the resistance to the removing agent, and further the conductive laminated body was good in both conductivity and transparency.

Further, in the case where the thickness (t) of the protective layer was large while the protective layer material did not contain the specific elements even though the protective layer did not have a crosslinked structure (Examples 1 and 2) and in the case where the protective layer had a crosslinked structure while the thickness (t) of the protective layer was in the specific range even though the protective layer material contained any specific element (Examples 8 to 13), the resistance to the removing agent could be sufficiently established. Depending on the type and diameter (r) of the linear structures, making the average thickness (t) of the protective layer thicker could be disadvantageous for the optical property (Examples 1 to 4).

Furthermore, if photo-initiators, the maximum absorption wavelength values of which were different from each other by the specific range, were mixed in the case where the protective layer was crosslinked (Examples 18 and 19), the resistance to the removing agent could be enhanced, compared with the case where the corresponding photo-initiators were not mixed (Examples 7 and 8) or the case where photo-initiators, the maximum absorption wavelength values of which were different from each other by less than the specific range, were mixed (Examples 20 and 21). Moreover, in the case where a conductive component not only having a network structure composed of linear structures but also containing a nonlinear structure constituent was used to form the conductive layer (Example 17), the optical property was inferior owing to the dense existence of the nonlinear structure constituent, and the protective layer was likely to be eroded when the conductive component was removed, to lower the resistance to the removing agent, compared with the case where a network structure only existed (Example 5).

In the case where no conductive layer was formed, the surface resistance value could not be measured, and a conductive layer could not be obtained (Comparative Example 1). In the case where no protective layer was formed (Comparative Examples 2 and 3), and in the case where even though a protective layer complying with conditions was formed, the conductive layer was formed of a conductive component composed of nonlinear structures (Comparative Examples 4 and 5), further in the case where since the resistance of the protective layer material to the removing agent was low, the protective layer had only portions thinner than the removed thickness (X) of the protective layer, the oligomer generation from the substrate due to heat occurred irrespective of the conductive component and the resin (Comparative Example 7).

In the case where the average thickness (t) of the protective layer exceeded 1,000 nm (Comparative Example 6), the intended conductive laminated body could not be obtained. In addition, even though the conductive laminated body seemingly showed such properties as resistance to the removing agent and electric insulation, neither the protective layer nor the conductive component could be removed. Consequently the conductive laminated body obtained did not allow the patterning by chemical etching. This conductive laminated body could be applied only to a costly method with a low processing speed unsuitable for processing a large area such as a laser ablation method.

Further, compared with the case where nonlinear structures were used (Comparative Examples 4 and 5), in the case where the conductive component was composed of linear structures even though the same protective material was used (Example 6), the line width of the etched line pattern was thin and was prevented from thickening, though the line width of the printed pattern was not different from that of the former. In the case where the contact angle was not in the specific range though the protective layer material did not contain the specific elements (Examples 23 to 25), line thickening occurred and the standard deviation (σ) of line widths was large, resulting in poor line straightness. However, in the case where resins were mixed instead of using one resin only (Examples 14 to 16), the contact angle could be adjusted, and the standard deviation (σ) of line widths could be lessened while the line thickening was inhibited, thus allowing a highly precise and beautiful pattern with thin lines to be formed. On the other hand, in the case where no protective layer was formed (Comparative Example 2) and in the case where the protective layer formed contained a constituent containing a specific element and ions, the etched line pattern had thick lines even though no line thickening occurred at the time of printing (Example 26).

### INDUSTRIAL APPLICABILITY

This invention relates to a conductive laminated body having resistance to the removing agent used in the chemical etching for processing and forming the conductive laminated body into an electrode member used in a touch panel or the like and also having good durability to heat. Further, this invention relates to a conductive laminated body that can be used also in the electrode members used for display-related articles such as liquid crystal displays, organic electroluminescence and electronic paper, and also for solar cell modules, etc.

### MEANINGS OF SYMBOLS

1: a substrate
2: a conductive layer
3: a protective layer
4: a conductive surface observed in the direction perpendicular to a lamination surface
5: a single fibrous conductor (an example of linear structures)
6: an aggregate of fibrous conductors (an example of linear structures)
7: a nanowire of a metal or metal oxide (an example of linear structures)
8: a needle-like conductor such as a whisker (an example of linear structures)
10: a contact point between fibrous conductors overlying each other
11: contact points between nanowires of a metal or metal oxide overlying each other
12: contact points between needle-like conductors such as whiskers overlying each other
13: a conductive laminated body having conductive regions and nonconductive regions
14: a substrate of a conductive laminated body having conductive regions and nonconductive regions
15: a conductive layer of a conductive laminated body having conductive regions and nonconductive regions
16: a protective layer of a conductive laminated body having conductive regions and nonconductive regions
17: a bonding layer for laminating conductive laminated bodies respectively having conductive regions and nonconductive regions by an adhesive or tackifier
18: a substrate on the screen side of a touch panel
19: a hard coating layer laminated on a substrate on the screen side of a touch panel
20: a protective layer surface
21: the thickness (t1) of a protective layer at the portion where no linear structures exist
22: the thickness (t2) of a protective layer at the portion laminated above the top of a single linear structure
23: the thickness (t2) of a protective layer at the portion
laminated above the top of an aggregate of linear structures
24: a linear structure not constituting an aggregate
25: a single linear structure constituting an aggregate
26: an aggregate consisting of linear structures
27: a substrate
28: the diameter (r) of a single linear structure
29: the diameter (r) of an aggregate consisting of linear structures
100: a reactor
101: a sintered quartz plate
102: an enclosed catalyst supply unit
103: a catalyst introduction line
104: a raw gas supply line
105: an exhaust gas line
106: a heater
107: an inspection port
108: a catalyst

## Claims

1. A conductive laminated body, in which a conductive layer having a network structure composed of linear structures and a protective layer are laminated at least on one surface of a substrate, wherein the average thickness (t) of the protective layer is 100 to 1,000 nm.

2. A conductive laminated body, according to claim 1, wherein if the thickness of the protective layer removed in the case where the protective layer is coated with a removing agent containing an acid component and having a pH of 2.0 at 130°C for 3 minutes is X, the protective layer has portions thicker than X and portions thinner than X.

3. A conductive laminated body, according to claim 1 or 2, wherein the aforementioned protective layer is composed of a polymer compound not containing any of the following:
S element, P element, metal element, metal ion and the N element constituting a functional group

4. A conductive laminated body, according to any one of claims 1 through 3, wherein the surface of the aforementioned protective layer has a pure water contact angle of 80° or more and an oleic acid contact angle of 13° or more.

5. A conductive laminated body, according to claim 3 or 4, wherein the aforementioned polymer compound has a crosslinked structure.

6. A conductive laminated body, according to any one of claims 1 through 5, wherein the aforementioned linear structures are silver nanowires and the protective layer is composed of a polyfunctional acrylic polymer compound or polyfunctional methacrylic polymer compound not containing any of the following:
S element, P element, metal element, metal ion and the N element constituting a functional group

7. A conductive laminated body, according to any one of claims 1 through 5, wherein the aforementioned linear structures are carbon nanotubes and the protective layer is composed of a polyfunctional acrylic polymer compound or polyfunctional methacrylic polymer compound not containing any of the following:
S element, P element, metal element, metal ion and the N element constituting a functional group

8. A conductive laminated body, according to any one of claims 1 through 7, wherein the aforementioned protective layer contains two or more photo-initiators, the respective maximum absorption wavelength values of which are different from each other by 20 nm or more.

9. A conductive laminated body, according to any one of claims 1 through 8, wherein the total light transmittance based on JIS K 7361-1 (1997) in the case where light falls on the protective layer side is 80% or more.

10. An acid-treated conductive laminated body, obtained by coating the protective layer of the conductive laminated body set forth in any one of claims 1 through 9, with a removing agent containing an acid component and having a pH of 2.0 at 130°C for 3 minutes, which has conductive regions and nonconductive regions, wherein the conductive component is removed in the nonconductive regions while the removal marks of the non-remaining conductive component exist.

11. A touch panel obtained by using the conductive laminated body set forth in any one of claims 1 through 9.
